(19) Europäisches Patentamt
European Patent Office
Office européen des brevets

(11) **EP 3 803 278 B1**

(12) **EUROPÄISCHE PATENTSCHRIFT**

(45) Veröffentlichungstag und Bekanntmachung des Hinweises auf die Patenterteilung:
**26.07.2023   Patentblatt 2023/30**

(21) Anmeldenummer: **19726997.0**

(22) Anmeldetag: **27.05.2019**

(51) Internationale Patentklassifikation (IPC):
**G01D 5/245** (2006.01)

(52) Gemeinsame Patentklassifikation (CPC):
**G01D 5/2455; G01D 5/2458**

(86) Internationale Anmeldenummer:
**PCT/EP2019/063659**

(87) Internationale Veröffentlichungsnummer:
**WO 2019/224400 (28.11.2019 Gazette 2019/48)**

(54) **ABSOLUTWERTGEBER**

ABSOLUTE ENCODER

CODEUR ABSOLU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.05.2018   DE 102018112653
31.07.2018   DE 102018118477**

(43) Veröffentlichungstag der Anmeldung:
**14.04.2021   Patentblatt 2021/15**

(73) Patentinhaber: **Sensitec GmbH
35578 Wetzlar (DE)**

(72) Erfinder:
• **PAUL, Johannes
55128 Mainz (DE)**
• **GLENSKE, Claudia
35638 Leun (DE)**

(74) Vertreter: **Spachmann, Holger
Stumpf Patentanwälte PartGmbB
Alte Weinsteige 73
70597 Stuttgart (DE)**

(56) Entgegenhaltungen:
**EP-A2- 2 182 330          WO-A1-92/04598
WO-A2-2010/117891     DE-A1-102017 009 331**

**Beschreibung**

Die vorliegende Erfindung betrifft einen magnetischen Absolutwertgeber zur Bestimmung der Absolutposition zweier bezüglich einer Winkelposition oder einer Längenposition relativ zueinander verstellbarer Körper, mit wenigstens einer sich entlang einer Absolutspur erstreckenden ersten Maßverkörperung, welche eine Vielzahl von ersten magnetischen Codeelementen umfasst, mit zumindest einer ersten Magnetfeldsensoranordnung zum Abtasten der ersten Maßverkörperung, und mit einer Auswerteeinheit, welche zum Empfangen von Messsignalen von der ersten Magnetfeldsensoranordnung eingerichtet ist.

STAND DER TECHNIK

Absolutwertgeber sind Messgeräte zur Bestimmung einer absoluten Winkelposition oder einer absoluten Längenposition zweier Körper, die bezüglich ihrer Winkelposition bzw. Längenposition relativ zueinander verstellbar sind, und werden insbesondere als Weg- oder Winkelmessgeräte an Werkzeugmaschinen, in der Handhabungs- und Automatisierungstechnik und an Mess- und Prüfeinrichtungen eingesetzt.

Absolutwertgeber geben die Absolutposition zumeist in Form eines digitalen Zahlenwerts aus. Da dieser Zahlenwert über die gesamte Messlänge bzw. Messbereich des Absolutwertgebers eindeutig ist, wird keine anfängliche Referenzfahrt, wie z.B. bei Inkrementalgebern, benötigt. Dagegen messen Inkrementalgeber eine relative Positionsänderung anhand einer Inkrementveränderung, wobei ein Inkrement als eine Basisstruktur aus Codeelementen einer sogenannten Maßverkörperung angesehen werden kann. Die Maßverkörperung ist in diesem Zusammenhang eine Verkörperung von Inkrementinformationen mittels abtastbaren Codeelementen. Inkrementalgeber zählen in der Regel eine Anzahl von Inkrementen, die bei einer Positionsänderung überfahren werden. Hierbei ist die Relativposition nur bekannt in Bezug auf eine Position zu Beginn der Messung bzw. kann als Absolutinformation durch eine Referenzfahrt, z.B. an einen Anschlag oder an eine Referenzposition, ermittelt werden.

Neben optischen Absolutwertgebern, bei denen mehrere Codespuren einer Maßverkörperung mithilfe von optoelektronischen Sensoren parallel abgetastet werden, werden in verschmutzungsanfälligen Umgebungen oftmals auch magnetische Absolutwertgeber eingesetzt. Bei diesen erfolgt die Kodierung entweder durch Lageauswertung eines rotierenden Magneten oder durch Auswertung eines durch eine Maßverkörperung modulierten Magnetfeldes nach dem Nonius-Prinzip. Beim Nonius-Prinzip weist die Maßverkörperung zwei Spuren mit einer Anzahl von äquidistanten Codeelementen auf, wobei sich die Anzahl der Codeelemente um Eins unterscheidet. Dadurch ergibt sich beim Abtasten der jeweiligen Spuren eine Phasenverschiebung zwischen den beiden Spuren, die mit der Absolutposition korreliert.

Weiterhin sind magnetische Absolutwertgeber bekannt, welche nach dem Code-Prinzip arbeiten. Hierbei sind die Codeelemente als magnetische Dipole ausgebildet, wobei je nach Ausrichtung eines jeweiligen Codeelements in der Maßverkörperung ein Nordpol oder ein Südpol abgetastet wird, wobei ein Binärcode definiert wird. Es werden in jeder Winkel- oder Längenposition des Absolutwertgebers mehrere Codeelemente gleichzeitig abgetastet, wobei die Kodierung entlang der Maßverkörperung so gewählt ist, dass ein jeweiliges, bei einer bestimmten Position abgetastetes Bitmuster eindeutig ist. Derartige magnetische Absolutwertgeber erfordern jedoch eine bestimmte Mindestgröße der Codeelemente, welche zudem aus einem aktiv magnetischen Material gefertigt sein müssen.

Aus den US 6871554 B2 und US 6841958 B2 sind magnetische Absolutwertgeber bekannt, wobei eine binäre Kodierung von Codeelementen bei einer Bewegung der Codeelemente gegenüber einer Magnetfeldsensoranordnung ausgelesen wird, und auf Basis der Kodierung eine Absolutposition bestimmt wird. Hierzu müssen zwingend die Codeelemente zunächst gegenüber der Magnetfeldsensoranordnung bewegt werden, so dass von einem Pseudo-Absolutwertgeber gesprochen werden kann. Während der Bewegung wird eine relative Lage einer Vielzahl der Codeelemente zeitlich nacheinander ermittelt. Eine Absolutwertbestimmung oder das Auslesen jeglicher Positionsinformation im Stillstand ist mit diesen Anordnungen nicht möglich, daher wird diese Positionsbestimmung auch Pseudo-Absolutwertbestimmung genannt.

In der US 9719805 B2 wird ein inkrementaler Längensensor beschrieben, der nicht in der Lage ist, einen Absolutwert im Stillstand auszulesen. Zur Auflösung einer Absolutwertposition wird ein 4-Bit Sensor verwendet, wobei zur Bestimmung einer Absolutwertposition eine relative Bewegung des Sensors gegenüber den Codeelementen notwendig wird, und eine Binärfolge durch eine entsprechende Nord-Südpolorientierung dargestellt wird. Die Codeelemente sind gleichabständig angeordnet, und es ist kein räumlicher Versatz der Relativposition von Codeelementen zur Informationscodierung vorgesehen.

Aus der DE 10 2015 121 474 A1 ist eine Maßverkörperung für einen Absolutwertgeber mit einer Inkrementalspur und einer Absolutspur bekannt, wobei die beiden Spuren jeweils eine Reihe hintereinander angeordneter magnetischer Polpaare einer aktiven Magnetanordnung umfasst. Eine Positionskodierung erfolgt mittels der Detektion einer positiven Phasenverschiebung, d. h. eines einseitigen positiven Längsversatzes der Polpaare der Absolutspur gegenüber den Polpaaren der Inkrementalspur, wodurch logische Werte codiert werden können. Allerding bricht eine derartige positive Phasenverschiebung eine 1:1 Zuordnung eines Polpaares der Absolutspur zu einem Polpaar der Inkrementalspur auf, so dass sich über eine vorgegebene Strecke eine Anzahl der Polpaare der Absolutspur kleiner als eine Anzahl der Polpaare der Inkrementalspur ergibt. Somit ist sowohl eine Herstellung der Maßverkörperung als auch eine Zuordnung eines Polpaares der Absolutspur zu einem Polpaar der Inkrementalspur aufwändig, auch lässt sich nach diesem Prinzip keine Maßverkörperung für einen Absolutwertgeber alleine, d.h. ohne eine zugehörige Inkrementalspur mit höherer Anzahl von Polpaaren realisieren. Letztlich kann dieses Prinzip nur für eine Maßverkörperung aus aktiven Magnetpolpaarungen eingesetzt werden, die ein eigenes Magnetfeld erzeugen.

Die DE 39 426 25 A1 beschreibt ebenfalls einen Absolutwertgeber mit einer Inkrementalspur und einer Absolutspur, wobei Signale, die durch Abtastung der Inkrementalspur erzeugt wurden, zur Synchronisierung der Signalverarbeitung zur Auswertung der Abtastsignale der Absolutspur verwendet werden. Ein Codelement der Absolutspur wird hierzu einem oder mehreren, räumlich kleineren Codelementen einer Inkrementalspur zugewiesen.

Weitere gattungsgemäße Druckschriften sind die DE 42 09 629 A1 und EP 1 980 824 A1, bei denen jeweils in vergleichbarer Weise wie in der DE 39 426 25 A1 einem Codelement einer Absolutspur eine Mehrzahl von Codelementen einer Inkrementalspur zugeordnet sind. Insofern ist in den vorgenannten Druckschriften zwingend die Existenz einer Inkrementalspur zur Bestimmung einer Absolutposition notwendig.

Die EP 2 182 330 A2 beschreibt eine Kombination einer Inkrementalpositionsbestimmung mittels einer ersten Sensoreinrichtung und einer hierzu orthogonal angeordneten Absolutpositionsbestimmung rechtwinklig zur Inkrementalspur auf einem Absolutpositionsbereich.

Die US 2010/117 891 A2 offenbart einen magnetischen Positionssensor mit einer Gruppe mehrerer N/S-Polpaaren. Während die Grenzen der Pole in einer als Hochauflösungsspur bezeichneten Spur äquidistant verlaufen, sind diese in einer als Referenzspur bezeichneten Spur nach links oder rechts versetzt und definieren dadurch sogenannte Referenzsegmente. Jedes Polpaar umfasst demnach zwei Grenzflächen, die in der Referenzspur entweder nach rechts oder links versetzt sein können.

Es ist die Aufgabe der vorliegenden Erfindung, einen verbesserten Absolutwertgeber bereitzustellen, der die vorgenannten Probleme des Stands der Technik überwindet.

OFFENBARUNG DER ERFINDUNG

Die Lösung der Aufgabe erfolgt durch einen Absolutwertgeber mit den Merkmalen des Anspruchs 1. Vorteilhafte Ausgestaltungen sind in den Unteransprüchen angegeben.

Es wird vorgeschlagen, dass jedes der ersten Codelemente um einen jeweiligen Kodierungsversatz versetzt, insbesondere symmetrisch zu einer dem jeweiligen ersten Codelement zugeordneten virtuellen Referenzposition in einer 1:1 Beziehung angeordnet ist, wobei die virtuellen Referenzpositionen äquidistant und versatzfrei eine Spur definieren, die sogenannte Absolutspur, wobei jedes erste Codelement zumindest auf der Grundlage seines Kodierungsversatzes ein bestimmtes Zeichen eines N Zeichen umfassenden Codes kodiert, und wobei die Auswerteeinheit dazu eingerichtet ist, auf der Grundlage der Messsignale den Kodierungsversatz eines abgetasteten ersten Codelements und das durch diesen Kodierungsversatz kodierte Zeichen zu ermitteln.

Die ersten Codelemente weisen magnetische Eigenschaften auf, die als aktive magnetische Eigenschaften, d.h. ein eigenes Magnetfeld erzeugende Eigenschaften oder als passive magnetische Eigenschaften, d.h. ein existierendes Magnetfeld beeinflussende Eigenschaften ausgestaltet sein können. Der besondere Vorteil liegt somit hierbei, dass die Maßverkörperung sowohl magnetisch aktiv mit einem Eigenmagnetfeld ausgestaltet sein kann, als auch passiv durch die Beeinflussung eines Fremdmagnetfelds.

Der Versatz kann ein- oder mehrstufig sein und kann ausgehend von der Referenzposition sowohl in einer positiven als auch negativen Versatzrichtung, d.h. symmetrisch zur virtuellen Referenzposition erfolgen. Regelmäßig ist ein maximaler Versatzabstand, insbesondere wenn dieser in Richtung der Ausdehnung der Absolutspur ausgerichtet ist, in der Größe bis zu 50% des Abstandes zweier benachbarter Referenzpositionen begrenzt. Bevorzugt wird ein Versatzabstand im Bereich von 25% bis zu 5% des Abstandes zweier benachbarter Referenzpositionen, insbesondere im Bereich von 20% bis zu 10%, und im speziellen von 15% bis zu 10% des Abstandes zweier benachbarter Referenzpositionen gewählt. Innerhalb dieser Versatzabstandsbereiche lassen sich Phasenversatzinformationen durch Magnetfeldsensoren mit hoher Genauigkeit auflösen.

Jeder Referenzposition ist genau ein erstes Codelement zugeordnet, so dass entlang einer festlegbaren Strecke über der Absolutspur eine gleiche Anzahl von Referenzpositionen und ersten Codelementen angeordnet sind. Hierdurch ist es möglich, aus der Abfolge von ersten Codelementen, und unter Wissen möglicher positiver und negativer Versatzgrößen der Codelemente zu den virtuellen Referenzposition die Position der zugeordneten, äquidistant und versatzfrei angeordneten virtuellen Referenzposition der Absolutspur zu ermitteln. Insofern kann durch einen relativen Vergleich der Versatzgrößen der ersten Codelemente zueinander die virtuellen Referenzposition und somit die Absolutspur extrahiert werden. Dies ermöglicht, auf eine zweite, separate physikalische Inkrementalspur zu verzichten, und somit eine a-priori Kenntnis der Referenzposition zu umgehen, wobei diese a-posteriori virtuell konstruierbar ist. Dabei sollten vorteilhaft, zumindest sofern keine physikalischen Referenzpositionen vorhanden sind, von den ersten Codelemente dargestellte Codeinformationen, die einen gleichen Versatz aller betrachteten Codeelemente zu den virtuellen Referenzpositionen bedingen, ausgeschlossen sein, z.B. binäre Informationen wie "0000" bzw. "1111" eines 4-Bit-Codes.

In diesem Zusammenhang definiert N eine Anzahl verschiedener Informationszeichen, die ein einzelnes Codeelement in Bezug auf seine Referenzposition darstellen kann, und die regelmäßig mit der Anzahl der möglichen Kodierungsversätze zur Referenzposition und/oder mit einer magnetischen Polarisierung oder magnetischem Verhalten korreliert. So gilt bezüglich einer Binärcodierung N=2 - dies steht für die binären Informationen "0" und "1" - wofür zur Kodierung der binären Informationen zumindest ein Kodierungsversatz von der Referenzposition eingenommen werden kann, und wofür bevorzugt zwei entgegengesetzt gerichtete Kodierungsversätze zur Referenzposition eingenommen werden können. Die maximale Größe eines räumlichen Kodierungsversatzes ist natürlich von dem halben Abstand zweier unmittelbar benachbarter Relativpositionen beschränkt, sofern der Kodierungsversatz in Verlaufrichtung der Absolutspur verläuft. Eine Anzahl P von Codeelementen kann von der Magnetfeldsensoranordnung als Codewort gleichzeitig erfasst werden, so dass $N^P$ verschiedene Positionsinformationen durch den Absolutwertgeber für die Bestimmung der Absolutposition ausgewertet werden können.

Aufgrund der Möglichkeit, mit der Magnetfeldsensoranordnung ein Codewort auszulesen, das eine Absolutposition einer betrachteten Anordnung von P ersten Codeelementen kodiert, kann bereits die Absolutposition aus der codebasierten Positionsinformation bestimmt werden. Da die Magnetfeldsensoranordnung darüber hinaus die Größe eines Versatzes der ersten Codeelemente von der virtuellen Referenzposition erfasst, kann eine verbesserte Positionsbestimmung unter Heranziehung dieser lokalen Versatzinformation erfolgen. Die lokale Versatzinformation kann als gemittelter Versatzabstand einer negativen und positiven Versatzabstandes bestimmt werden. So kann beispielsweise die Absolutposition bestimmt werden durch:

$$Absolutposition =$$

$$codebasierte\ Positionsinformation\ \ + lokale\ Versatzinformation$$

und insbesondere:

$$Absolutposition =$$

$$Polnummer * Breite(Polperiode) + (Pos\_Pole\_negativ + Pos\_Pole\_positiv)/2,$$

mit der Breite als Abstand zweier virtueller Referenzpositionen und der Polnummer als codebasierte Nummer der erfassten Referenzposition, sowie Pos_Pole_positiv als die Position innerhalb einer Polperiode mit negativem Versatz und Pos_Pole_negativ als die ermittelte Position innerhalb einer Polperiode mit positivem Versatz.

Im Hinblick auf eine funktionale Sicherheit einer sicherheitskritischen Anwendung des Absolutwertgebers ist eine redundante Auslegung des Absolutwertgebers besonders vorteilhaft. Durch die Kombination der codebasierten Positionsinformation mit einer lokalen Versatzinformation kann selbst bei Nichtberücksichtigung oder Fehlinterpretation der lokalen Versatzinformation noch ein brauchbarer Absolutpositionswert ermittelt werden. Liegen eine Definition der (virtuellen) Referenzpositionen als separate physikalische Inkrementalspur vor, oder werden die virtuellen Referenzposition alleine betrachtet, ohne dass die Codeversätze im Einzelnen ausgewertet werden, so kann eine vorliegende Signalabfolge der (virtuellen) Inkrementalspur in der Art eines üblichen Inkrementalpositionsgebers, oder als pseudo-Absolutwertgeber mit einer nicht flüchtigen Positionsinformation bei Ausschalten des Systems ermittelt werden. Damit kann eine Absolutwertposition redundant mittels der Absolutspur und der (virtuellen) Inkrementalspur ermittelt werden, so dass erhöhten Anforderungen der funktionalen Sicherheit hinsichtlich einer erhöhten Ausfallsicherheit und Vermeidung von Fehlangaben entsprochen werden kann.

Der erfindungsgemäße Absolutwertgeber kann sowohl als Winkelgeber zur Bestimmung einer absoluten Winkelposition oder als Lineargeber zur Bestimmung einer absoluten Längenposition ausgebildet sein. Wie bei derartigen Absolutwertgebern üblich, ist die auf dem ersten Körper angeordnete Maßverkörperung und die auf dem zweiten Körper angeordnete Magnetfeldsensoranordnung derart mechanisch gekoppelt, so dass eine Relativbewegung der Körper zueinander zu einer Relativbewegung der Maßverkörperung zur Magnetfeldsensoranordnung führt. Die Maßverkörperung erzeugt ein magnetisches Streufeld bzw. beeinflusst ein Streufeld eines extern erzeugten Messmagnetfelds. Dieses Streufeld bzw. die Feldveränderung wird durch die Magnetfeldsensoranordnung detektiert. Die Absolutspur ist in Richtung einer Verstellrichtung der Körper, d. h. in der Regel kreisförmig bzw. linear durch die Körper definiert. Bei den genannten Referenzpositionen handelt es sich um virtuelle Markierungen, die nicht zwingend direkt, d. h. physisch auf der Maßverkörperung angebracht sein müssen, sondern in anderer geeigneter Weise indirekt oder durch Referenzieren auf andere geeignete Referenzpunkte oder Bezugspunkte, beispielsweise durch eine Analyse eines Versatzes der ersten Codeelemente zueinander, ermittelt werden können. Die versatzfreie Anordnung längs der Absolutspur bezieht sich insbesondere darauf, dass die Referenzpositionen keinen lateralen Versatz aufweisen, d. h. keinen Versatz quer bzw. längs zur Verlaufsrichtung der Absolutspur, sondern gleichmäßig und äquidistant angeordnet sind. Alle Referenzpositionen definieren somit die Absolutspur. Der Kodierungsversatz bestimmt eine räumliche Versatzschrittweite zur Referenzposition, wobei einzelne Codeelemente auch eine Kodierungsversatz von Null aufweisen können, d.h. an der Referenzposition verbleiben, während andere Codeelemente in Schrittweite(n) des Kodierungsversatzes von der Referenzposition räumlich beabstandet sind, um Absolutpositionsinformationen als Zeichen zu kodieren.

Unter einem Code wird in diesem Zusammenhang die Gesamtheit der kodierbaren Zeichen verstanden. Der Code ist im einfachsten Falle ein Binärcode mit den Zeichen NULL und EINS, kann aber auch drei oder mehr Zeichen umfassen. So kann sich bei verschiedenen Kodierungsversätzen, beispielsweise 4 Kodierungsversätzen ein Code anbieten, der eine erhebliche Reduktion der Codeelementen-Anzahl bei gleicher Genauigkeit bzw. verringerter Menge an Magnetfeldsensoren bei gleicher Genauigkeit oder einer erhöhten Genauigkeit ermöglicht.

Die Kodierungsversätze sind symmetrisch zur Referenzposition z.B. in positiver und negativer Richtung zur Referenzposition ausgerichtet, und sind regelmäßig in einer gleichen Versatzgröße bzw. bei mehreren Kodierungsversätzen in gleichen Versatzgrößen in positiver wie negativer Richtung versetzt. Denkbar ist aber auch eine insoweit unsymmetrische Versatzgröße in beiden Richtungen zur Referenzposition, so dass die Versatzgröße in positiver Richtung anders als in negativer Richtung gewählt werden kann. Auch kann ein Codeelement entlang der Absolutspur auf der Referenzposition angeordnet, also einen Versatz von "0" aufweisen, wobei dieser Lage eine Codeinformation zugeordnet ist.

In einer Ausführungsform können die Codeelemente aktiv magnetisch sein, d.h. aus einem dauermagnetischen - permanentmagnetischen Material hergestellt sein. So kann ein hartmagnetisches Codeelement als ein Permanentmagnet mit einem Nord- und einem Südpol ausgeführt sein, wobei vorzugsweise die Magnetisierung in Richtung der Absolutspur bzw. einer Inkrementalspur ausgerichtet ist. Die Permanentmagnete können lückenlos oder mit einem lückenhaften Versatz zueinander angeordnet sein, wobei der Versatz für die Kodierung eines Zeichens variieren kann, oder die Permanentmagnete können eine unterschiedliche Länge für die Codierung eines Zeichens aufweisen.

Alternativ können weichmagnetische Codeelemente eingesetzt werden, d.h. Codeelemente, welche aus einem temporär magnetisierbaren bzw. ferromagnetischen Material, beispielsweise Eisen, Nickel, Kobalt oder einer entsprechenden Legierung hergestellt sind bzw. dieses enthalten. So kann ein Codeelement als weichmagnetischer Zahn oder als Ausnehmung in einem weichmagnetischen Blech ausgebildet sein. Für die Verwendung von passivmagnetischen Codeelementen kann die Magnetfeldsensoranordnung zusätzlich einen Messmagneten umfassen, wobei dessen Flussdichte bzw. deren durch die Codeelemente verursachte Änderungen durch die Magnetfeldsensoranordnung in grundsätzlich bekannter Weise vermessen werden können. Die magnetischen Codeelemente sind dann dazu geeignet, eine Führung bzw. Verzerrung des Magnetfeldes des Messmagneten hervorzurufen, die von der Magnetfeldsensoranordnung detektiert werden kann.

Bei dem erfindungsgemäßen Absolutwertgeber wird also eine Kodierung verwendet, bei welcher ein jeweiliges Zeichen primär nicht durch intrinsische Eigenschaften des Codeelements erfolgt, sondern durch den Kodierungsversatz, d.h. eine räumliche Abweichung der Position des Codeelements relativ zu einer jeweiligen Referenzposition.

Erfindungsgemäß kodieren jeweils P aufeinanderfolgende Codeelemente ein jeweiliges Codewort, wobei jedes Codewort innerhalb der ersten Maßverkörperung einmalig ist und eine jeweilige Absolutposition repräsentiert. Es ist also jedem Codewort eine Winkelposition bzw. eine Längenposition zugeordnet, so dass die Auswerteeinheit mithilfe eines Algorithmus oder bevorzugt einer Nachschlagtabelle für ein ermitteltes Codewort die zugehörige Absolutposition ermitteln kann. Bei der Gesamtheit der auf der Maßverkörperung kodierten Zeichenfolge kann es sich beispielsweise um einen sogenannten PRBS-Code (von englisch "pseudorandom binary-sequence") handeln, der auf eine Weise erzeugt werden kann, dass innerhalb der gesamten durch die Maßverkörperung repräsentierten Zeichenfolge kein Codewort, d.h. keine Reihe von P aufeinanderfolgenden Zeichen, mehr als einmal vorkommt. Die Größe P definiert hier eine natürliche Zahl, die mindestens 2 beträgt, vorteilhafterweise ein Vielfaches von 2, beispielsweise 4, 8 oder 16. Es können auch eine andere Bittiefe, die die Genauigkeit der Absolutwertangabe definiert gewählt werden, so kann P auch 7, 8 oder 11 Zeichen umfassen. Je größer die Bittiefe ist, desto mehr eindeutige Codewörter können gebildet werden, desto länger kann eine Absolutspur sein, die überall ihre eindeutige Absolutposition repräsentiert. So kann bei einer Bittiefe von 8 bzw. 10 die Absolutspur $2^8$ bzw. $2^{10}$ Codeelemente lang sein und trotzdem an jeder Position ein eindeutiges Codewort enthalten. Vorzugsweise ist die Zahl P so gewählt, dass eine möglichst kurze Magnetfeldsensoranordnung bei ausreichender Länge der Absolutspur erreicht werden kann. Anstelle eines Binärcodes können auch Codierungen mit mehreren Codezeichen pro Zeichen gewählt werden, um die Anzahl P bei gleicher Genauigkeit zu verringern, wobei jedes Codeelement mehr als zwei Codierzustände angeben kann, beispielsweise verschiedene Versatzlängen zur Relativposition oder zusätzlich geänderte Magneteigenschaften wie verschiedene magnetische Polarisierung kombiniert mit einem räumlichen Versatz oder ähnliches. So kann beispielsweise ein binärer 11 Bit Code mit $2^{11}$ = 2048 Codeelementen ersetzt werden durch einen mit 3 Zeichen (-1; 0; 1) ausgestatteten Codiersystem mit $3^7$ = 2187 Codeelementen.

Erfindungsgemäß umfasst die erste Magnetfeldsensoranordnung eine Anzahl von ersten Magnetfeldsensoren, welche derart auf dem zweiten Körper angeordnet sind, dass die ersten Magnetfeldsensoren jede Position der ersten Maßverkörperung auf dem ersten Körper mehrere benachbarte Codeelemente gleichzeitig abtasten, so dass jeder Magnetfeldsensor ein jeweiliges erstes Codeelement abtastet. Die Magnetfeldsensoren sind hierfür hintereinander in Richtung der Spur angeordnet und weisen grundsätzlich einen Abstand auf, der dem Abstand der Referenzpositionen entspricht. Somit können mehrere aufeinanderfolgende Zeichen gleichzeitig von der Maßverkörperung abgelesen werden. Vorteilhafterweise können die Magnetfeldsensoren einen geringeren Abstand als eine Referenzposition aufweisen, um eine Detektionsgenauigkeit zu erhöhen, wie später noch erläutert wird.

Erfindungsgemäß ist die Anzahl von ersten Magnetfeldsensoren gleich oder größer der Anzahl P. Dadurch kann ein jeweiliges an dieser Stelle kodiertes Codewort simultan ausgelesen werden. Somit wird ermöglicht im Stillstand, d.h. ohne eine relative Positionsänderung der Codeelemente gegenüber der Magnetfeldsensoranordnung, eine Absolutposition auszulesen, da die Magnetfeldsensoranordnung vorzugsweise eine Ausdehnung aufweist, die mindestens einer erforderlichen Bittiefe eines die Absolutposition codierten Codeworts entspricht. Mit anderen Worten ist vorzugsweise die Magnetfeldsensoranordnung ausgelegt, kodierte Zeichen einer Anzahl erster Codeelemente oder eine höhere Anzahl erster Codeelemente, die zur Kodierung eines Codewortes notwendig ist, auszulesen, die eine Absolutpositionsbestimmung im Stillstand ermöglicht.

Gemäß einer weiteren vorteilhaften Ausführungsform der Erfindung ist ferner eine, eine Inkrementalspur definierende, zweite Maßverkörperung mit einer Vielzahl von äquidistanten, zweiten magnetischen Codeelementen und eine zweite Magnetfeldsensoranordnung zum Abtasten der zweiten Maßverkörperung vorgesehen, wobei die Inkrementalspur parallel beabstandet zur Absolutspur verläuft, wobei jede Referenzposition bezüglich ihrer Längsposition auf der Absolutspur durch die Längsposition zumindest eines zugeordneten zweiten Codeelements auf der Inkrementalspur bestimmt ist, und wobei die Auswerteeinheit dazu eingerichtet ist, Messsignale von der zweiten Magnetfeldsensoranordnung zu empfangen und auf deren Grundlage die Referenzposition zu ermitteln. Die zweite Maßverkörperung dient somit als Referenz, auf deren Grundlage die Lage der Referenzpositionen ermittelt werden kann. In dem Zusammenhang wird unter der Längsposition eine Position eines Codeelements bzw. einer Referenzposition in Verlaufsrichtung oder ggf. auch quer zur Verlaufsrichtung der jeweiligen Spur verstanden, d.h. einer Position in Verstellrichtung der Körper. Beispielsweise können die Referenzpositionen in Bezug auf die zugehörigen zweiten Codeelemente jeweils die gleiche Längsposition aufweisen und lediglich in einer Richtung senkrecht zu den Spuren versetzt sein, wobei der Abstand der Referenzpositionen und zweiten Codeelemente dem Abstand zwischen der Absolutspur und der Inkrementalspur entspricht. Dabei entspricht die relative Lage der Referenzpositionen auf der Absolutspur der Lage der zweiten Codeelemente auf der Inkrementalspur. Die Inkrementalspur dient zur exakten Festlegung der Referenzposition der Codeelemente auf der Absolutspur und dient somit zur Erhöhung der Genauigkeit der Positionsmessung. Hierbei ist es vorteilhaft, dass die Position der zweiten Codeelemente eine Referenzposition zumindest in einer Achsenrichtung definiert, gleichwohl können die zweiten Codeelemente einen konstanten Offset zur Referenzposition einnehmen. Ein Offset kann von der Auswerteeinheit berücksichtigt, im einfachsten Fall abgezogen werden.

In der Regel kann für die Bestimmung der Referenzposition auf der Absolutspur die Längsposition eines einzelnen zugeordneten Codeelements auf der Inkrementalspur herangezogen werden. Es ist auch denkbar, dass zur Bestimmung der Referenzposition die Längspositionen zweier oder mehrerer Codeelemente auf der Inkrementalspur herangezogen werden. So kann beispielsweise durch eine Mittelung von detektierten Lagepositionen von Codeelementen der Inkrementalspur eine Referenzposition entlang der Absolutspur mit höherer Genauigkeit bestimmt werden. Ist neben einer Absolutspur eine Inkrementalspur vorhanden, so wird auch diese von Sensorelemente der Magnetfeldsensoranordnung abgetastet. Hierzu bietet es sich an, Sensorelemente der Magnetfeldsensoranordnung in zwei Unteranordnungen zur Abtastung der Codeelemente der ersten Maßverkörperung entlang der Absolutspur und zur Abtastung der Codeelemente der zweiten Maßverkörperung entlang der Inkrementalspur vorzusehen.

Vorteilhafterweise erfolgt die Kodierung eines jeweiligen Zeichens auf der Grundlage eines Betrags und/oder einer Richtung des Kodierungsversatzes. Beispielsweise könnte ein Binärcode dadurch kodiert werden, dass ein Versatz in Richtung der Absolutspur in die eine Richtung das Zeichen NULL und in der entgegengesetzten Richtung das Zeichen EINS kodiert. In dem Fall können die Beträge des Kodierungsversatzes gleich sein. So könnte aber auch ein Versatz mit unterschiedlichen Beträgen vorgesehen sein, beispielsweise mit Beträgen, die sich um einen Faktor 2 unterscheiden, wodurch in Abwandlung des vorhergehenden Beispiels durch ein Codeelement insgesamt vier Zeichen kodiert werden könnten.

Grundsätzlich kann der Betrag des Kodierungsversatzes auch Null sein. So könnte zum Beispiel ein Binärcode dadurch kodiert werden, dass ein Versatz mit einem Betrag Null, d.h. einer Positionierung eines Codeelements auf seiner Referenzposition, das Zeichen NULL und ein Versatz in Richtung der Absolutspur mit einem vorgegebenen Kodierungsversatzbetrag das Zeichen EINS kodiert.

Gemäß einer vorteilhaften Abwandlung umfasst jedes erste und/oder jedes zweite Codeelement einen Permanentmagneten, wobei die magnetische Polarität eines jeweiligen Codeelements durch die zugeordnete Magnetfeldsensoranordnung detektierbar ist, wobei die Kodierung eines jeweiligen Zeichens zusätzlich auf der Grundlage der Polarität erfolgt. Die Codeelemente sind demnach als Dipolmagneten konfiguriert, wobei beispielsweise entweder der magnetische Nordpol oder der magnetische Südpol in Richtung auf den jeweiligen Magnetfeldsensor weist. Dadurch lässt sich die Codetiefe, d.h. die Anzahl der möglichen Zeichen, durch ein jeweiliges Codeelement bei ansonsten gleichen Vorgaben für den Kodierungsversatz verdoppeln. Alternativ kann die Auswertung der Polarität auch dazu benutzt werden, um eine Redundanz bei der Kodierung herzustellen. Zum Beispiel kann die Polarität auch ein Prüfbit kodieren.

Erfindungsgemäß umfasst der Kodierungsversatz eine Längskomponente und bevorzugt eine Querkomponente entlang der Absolutspur. Unter einer Längskomponente des Kodierungsversatzes wird ein Versatz längs zur Absolutspur verstanden, während eine Querkomponente des Kodierungsversatzes senkrecht zu der Richtung der Absolutspur verläuft. Bevorzugt weist der Kodierungsversatz lediglich eine Längskomponente auf, d.h. die ersten Codeelemente sind lediglich in der Verlaufsrichtung der Absolutspur zu ihren zugehörigen Referenzpositionen versetzt. Grundsätzlich kann jedoch auch zusätzlich eine Kodierung dadurch erfolgen, dass ein erstes Codeelement in einer Richtung quer zur Verlaufsrichtung der Absolutspur versetzt angeordnet wird, wobei hierdurch ebenfalls zwei oder mehr Zeichen, beispielsweise in Abhängigkeit von dem Betrag des Kodierungsversatzes, dargestellt werden können, wodurch beide Varianten kombiniert werden.

Es hat sich als vorteilhaft erwiesen, wenn zumindest die erste Magnetfeldsensoranordnung wenigstens einen Magnetfeldsensor umfasst, wobei jeder Magnetfeldsensor mehrere, insbesondere zwei, vier oder acht magnetoresistive Widerstandselemente umfasst, welche zu wenigstens einer Wheatstone-Messbrücke, insbesondere einer Wheatstone-Halbbrücke oder einer Wheatstone-Vollbrücke, zusammengeschaltet sind. Beispiele für magnetoresistive Widerstandselemente sind insbesondere AMR-, CMR-, TMR- oder GMR-Magnetfeldsensoren. Diese auch als xMR-Magnetfeldsensoren bezeichneten Sensortypen zeichnen sich gegenüber Hall-Sensoren, die ebenfalls verwendet werden können, durch eine bis zu 50-mal höhere Sensitivität aus. Den genannten magnetoresistiven Sensoren liegt der anisotrope magnetoresistive Effekt (AMR-Effekt), der kolossale magnetoresistive Effekt (CMR-Effekt), der magnetische Tunnelwiderstand (TMR-Effekt) bzw. der Riesenmagnetowiderstand (GMR-Effekt) zugrunde. Eine Wheatstone-Halbbrücke umfasst typischerweise jeweils zwei magnetoresistive Widerstandselemente, welche bevorzugt gegensinnig verschaltet sind. Unter einer gegensinnigen Verschaltung wird eine Anordnung der Widerstandselemente verstanden, bei welcher ein auf beide Widerstandselemente einwirkendes äußeres Magnetfeld bei dem einen Widerstandselement zu einem Anstieg und bei dem anderen Widerstandselement zu einer Abnahme des Widerstandes führt. Eine derartiges reziprokes Widerstandsverhalten kann beim Einwirken eines gleichgerichteten Magnetfeld sehr einfach erreicht werden, indem beispielsweise bei vorgenannten Widerstandstypen die Pinningrichtung bei TMR oder GMR Elementen entgegengesetzt werden, oder bei AMR Elementen die Barberpolanordnung entgegengesetzt angeordnet wird. Anstelle eines gleichgerichteten Magnetfeldes kann ein Einwirken eines entgegengesetzten Magnetfelds genutzt werden, das durch eine bestimmte räumliche Anordnung der Widerstände oder durch eine geschickten Magnetflussführung, beispielsweise durch weichmagnetische Magnetflussleitelemente erreicht werden kann. Jeder Widerstand reagiert dann zwar auf ein äußeres Magnetfeld mit gleicher Änderung seines Widerstandswertes, aber durch die passende räumliche und/oder schaltungstechnische Anordnung der Widerstände zur Maßverkörperung kann eine gegensinnige Widerstandsänderung erzeugt werden.

Vorteilhafterweise können die magnetoresistiven Widerstandselemente richtungssensitive AMR-, GMR-, oder TMR-Widerstandselemente sein, deren Widerstand sich linear mit der Magnetfeldkomponente parallel zur Versatzrichtung ändert, bzw. deren Widerstand abhängt vom Winkel des Magnetfeldes ist. Durch eine geeignete Zusammenschaltung mehrerer, räumlich versetzter Widerstandselemente im Magnetfeldsensor, wobei sich regelmäßig eine Halbbrückenschaltung als Basisschaltungselement eignet, kann eine Winkellage und/oder Feldstärke eines Messmagnetfelds bestimmt werden. Somit ist der Magnetfeldsensor eingerichtet, eine Richtung einer zu messenden Magnetfeldkomponente als auch ein Feldstärkenbetrag zu messen. Damit kann insbesondere bei Streufeldern selektiv die Richtung und Stärke einer Magnetfeldkomponente gemessen werden. Denn die magnetischen Codeelemente bewirken ein inhomogenes Streufeld, das von ihnen im Falle vom Permanentmagneten selbst erzeugt wird, oder durch Verzerrung eines Messmagnetfelds, dass von einem (externen) Messmagneten erzeugt wird. Vorzugsweise sind die in der Magnetfeldsensoranordnung umfassten Magnetfeldsensoren eingerichtet, die Amplitude A des Streufeldes in Spurverlaufsrichtung zu messen, das im späteren als $H_{tan}$ oder als Tangentialkomponente bezeichnet werden soll (tan für tangential). Aufgrund der regelmäßigen Abstände zwischen den Codeelementen entlang der Absolut- oder Inkrementalspur - entlang der Absolutspur können die Größen der Abstände zwischen den Codeelemente zur Kodierung der Zeichen des eine Absolutposition angebenden Codes gegenüber gleichabständigen Referenzpositionen variieren - ergibt sich beim Bewegen der Codeelemente gegenüber den Magnetfeldsensoren ein im wesentlichen sinusförmiger Verlauf der Amplitude der Tangentialkomponente. Ein Zeichen des Codes entspricht einem Kodierungsversatz des Codeelements gegenüber einer virtuellen Referenzposition, die bei Anwesenheit einer Inkrementalspur sehr einfach durch ein Vergleich der relativen Lage der Codeelemente der Inkrementalspur gegenüber der relativen Lage der Codeelemente auf der Absolutspur ermittelt werden kann, wobei die Referenzposition der Codeelemente auf der Absolutspur der Lage der Codeelemente auf der Inkrementalspur entspricht, oder beispielsweise durch Interpolation hieraus ermittelbar ist.

Eine Auswertung eines Phasenwinkels des Amplitudenverlaufs der Tangentialkomponente ermöglicht eine Bestimmung der relativen Lage des Codeelements entlang des Spurverlaufs, wobei die Maxima und Minima des Amplitudenverlaufs in der Regel an den Endbereichen jedes Codeelements messbar sind, und sich in der Mitte des Codeelements oder exakt zwischen zwei Codeelementen jeweils ein Nulldurchgang der Tangentialkomponente einstellt. Insofern entspricht der Abstand zweier Referenzpositionen zueinander einer 360°-Phasendrehung der Tangentialkomponente.

Der Verlauf der Tangentialkomponente der Referenzspur kann näherungsweise dargestellt werden durch eine Sinusfunktion:

$$H_{tang\_reference} = H_0 \, sin \frac{2\pi}{360°}(\varphi - \varphi_0)$$

Die gemessene Amplitude am Sensor ist proportional zur Tangentialkomponente:

$$A_{sin\_ref} \sim H_{tang\_reference}$$

Hierbei ist $\frac{(\varphi - \varphi_0)}{360°} = \frac{s - s_0}{\lambda}$, wobei $\lambda$ die Periodenlänge der Codeelemente ist, s der zu detektierende Ort, s0 ein beliebiger Bezugsort, z.B. die Mitte zwischen zwei Codeelementen. $\varphi$ ist der Phasenwinkel der periodischen Sinusfunktion, $\varphi_0$ eine beliebiger Bezugswinkel.

Der Verlauf der Tangentialkomponente der Absolutspur kann ebenfalls näherungsweise durch eine Sinusfunktion dargestellt werden

$$A_{sin\_abs} \sim H_{tang\_absolute} = H_0 \, sin \frac{2\pi}{360°}(\varphi - \varphi_0 - \varphi_{Versatz})$$

Die gemessene Amplitude am Sensor ist proportional zur Tangentialkomponente:

$$A_{sin\_abs} \sim H_{tang\_absolute}$$

Der Wert für $\varphi_{Versatz}$ ist dabei keine Konstante über die Absolutspur, sondern ändert sich abhängig von der Position, insbesondere abhängig vom Kodierungsversatz. $\varphi_{Versatz}$ kann positive oder negative Werte annehmen, je nachdem ob das Codeelement in Richtung $\varphi_{Versatz} <= \varphi_+$ oder entgegengesetzt $\varphi_{Versatz} >= \varphi_-$ der Richtung der Absolutspur gegenüber der Referenzposition versetzt ist. Dabei sind $\varphi_+$ und $\varphi_-$ Maximalwerte, die angenommen werden können. Dort, wo zwei Codeelemente mit unterschiedlichem Kodierungsversatz aneinandergrenzen, ändern sich beim Überschreiten dieses Bereiches lokal die Werte für $\varphi_{Versatz}$, u.a. gibt es auch den Fall für $\varphi_{Versatz} = 0$.

Eine Bestimmung der Phasenlage eines versetzten Codeelementes ($\varphi - \varphi_0 - \varphi_{Versatz}$) gegenüber seiner Referenzposition ($\varphi - \varphi_0$) kann einen Rückschluss auf die Größe und Richtung des Versatzes ermöglichen und der Ermittlung des durch das Codeelement codierten Zeichens dienen. So kann der Unterschied der Phasenwerte verschiedener Codeelemente zur Zeichendekodierung herangezogen werden. Vorteilhafterweise wertet somit ein Magnetfeldsensor den Phasenverlauf der Tangentialkomponente bezüglich der Referenzposition aus, wobei hierzu jedem Codeelement ein Magnetfeldsensor zugeordnet ist, der den Versatz des Codeelements gegenüber der Referenzposition als Winkelwert ausdrücken kann. Hierzu wird vorgeschlagen, zumindest zwei um 90°, d.h. um $\lambda/4$ bzw. eine Viertel Abstand benachbarter äquidistanter Referenzpositionen versetzte Sensorelemente des Magnetfeldsensors vorzusehen.

$$A_{cos\_ref} \sim H_0 \, si\,n \frac{2\pi}{360°}(\varphi - \varphi_0 + 90°) = H_0 \, cos \frac{2\pi}{360°}(\varphi - \varphi_0)$$

$$A_{cos\_abs} \sim H_0 \, si\,n \frac{2\pi}{360°}(\varphi - \varphi_0 - \varphi_{Versatz} + 90°) = H_0 \, cos \frac{2\pi}{360°}(\varphi - \varphi_0 - \varphi_{Versatz})$$

Die Phasenlage kann dann direkt mittels einer Arkustangens-Funktion ermittelt werden,

$$\varphi_{ref} = \varphi - \varphi_0 = arctan\left(\frac{A_{sin\_ref}}{A_{cos\_ref}}\right)$$

$$\varphi_{abs} = \varphi - \varphi_0 - \varphi_{Versatz} = arctan\left(\frac{A_{sin\_abs}}{A_{cos\_abs}}\right)$$

Es hat sich weiterhin gezeigt, dass sich die Genauigkeit der Phasenermittlung und damit der Zeichendecodierung deutlich erhöht, wenn statt zwei um 90° versetzte Sensorelemente vier jeweils um 90° versetzte Sensorelemente verwendet werden, wobei die Elemente, die um 180° zueinander versetzt sind jeweils zu einem Paar zusammengefasst werden. Diese beiden zu einem Paar zusammengefassten Sensorelemente erfassen zwei Amplituden A mit dem gleichen Betrag aber umgekehrtem Vorzeichen, wenn der Phasenunterschied genau 180° ist. Subtrahiert man die beiden Werte

$$A_{sin} = A_{sin-ref} - A_{sin-ref+180°}$$

so erhält man die doppelte Amplitude und das System ist zusätzlich robuster gegenüber externe Störfelder, da durch die Subtraktion der homogene Anteil der Störfelder eliminiert wird.

$$A_{sin} = (A_{sin-ref} + A_{Störfeld}) - (A_{sin-ref+180°} + A_{Störfeld}) \sim 2A_{sin-ref}$$

Somit messen zwei Sensorelemente einen Sinuskomponente und zwei Elemente eine Kosinuskomponente, jeweils mit alternierenden Vorzeichen, die phasenrichtig addiert und mittels einer Arkustangens-Funktion zur Ermittlung des Phasenwertes mit hoher Genauigkeit dienen. Die 180° Aufspaltung hat einen weiteren Vorteil für den Fall, dass der Magnetfeldsensor sich genau zwischen einem Versatz nach links und einem Versatz nach rechts befindet. An dieser Stelle ist der messbare Versatz aus Sicht des Magnetfeldsensors Null und der Magnetfeldsensor liefert einen Zufallswert. Um dies zu vermeiden, ist der Magnetfeldsensor vorteilhaft so auszulegen, dass man wahlweise an dieser Stelle messen kann oder ½ Periode versetzt dazu. Dort ist der Magnetfeldsensorwert eindeutig. Dies entspricht quasi einem relativen elektronischen Bewegen von Magnetfeldsensor gegenüber Codeelement zur exakten Zeichendekodierung.
Der vorhergehenden Überlegung folgend umfasst gemäß einer weiteren vorteilhaften Ausführungsform die Magnetfeldsensoranordnung wenigstens einen Magnetfeldsensor, wobei jeder Magnetfeldsensor zum Erzeugen zumindest eines ersten Messsignals für eine erste Messposition und eines zweiten Messsignals für eine von der ersten Messposition in einer Verlaufsrichtung der Absolutspur beabstandeten zweiten Messposition eingerichtet ist, wobei der Abstand der Messpositionen kleiner ist als der Abstand benachbarter Referenzpositionen, insbesondere gleich dem halben Abstand, bevorzugt gleich einem Viertel des Abstands benachbarter Referenzpositionen (zur Messung einer Sinus- und einer Kosinuskomponente), und wobei die Auswerteeinheit dazu eingerichtet ist, unter Berücksichtigung eines vorgegebenen Kriteriums den Kodierungsversatz auf der Grundlage des ersten oder des zweiten Messsignals zu ermitteln. Jedes Codeelement einer Maßverkörperung wird also wenigstens an zwei Messpositionen, bevorzugt an vier Messpositionen abgetastet, um auch dann eine zuverlässige eindeutige Abtastung zu erzielen, wenn gerade ein Übergang eines Codeelementes mit negativem Versatz zu einem Codeelement mit positivem Versatz in den Bereich des Magnetfeldsensors gelangt. Bei Absolutwertgebern, bei denen ein jeweiliger Magnetfeldsensor nur an einer Messposition abtasten kann, besteht unter Umständen die Schwierigkeit, dass keine eindeutige Abtastung erfolgen kann, wenn $\varphi_{versatz} \sim 0$ ist. Hierbei kann es zu einer Art Prellen oder zur Ausgabe nicht eindeutiger Messwerte kommen. Durch die Abtastung an zwei oder auch mehr Messpositionen wird gewährleistet, dass sich das Sensorelement immer an einer Position zum Codeelement befindet, an der eine eindeutige Abtastung möglich ist. Die Entscheidung, welches der beiden Messsignale ausgewertet wird, kann beispielsweise aufgrund eines Vergleichs der Messsignale miteinander oder mit einem Referenzsignal erfolgen. Insbesondere kann eine Plausibilitätsprüfung durch einen Vergleich der Messsignale verschiedener Magnetfeldsensoren miteinander erfolgen. Eine Abtastung an verschiedenen Messpositionen kann bei der ersten, der zweiten oder beiden Magnetfeldsensoranordnungen vorgesehen sein. Insbesondere kann die Abtastung an mehreren Messpositionen dazu verwendet werden, den Kodierungsversatz zu ermitteln. Insbesondere sind vier Sensorelemente mit jeweils einem Viertel Abstand zwischen zwei Referenzposition in jedem Magnetfeldsensor umfasst, die derart ausgewertet werden, dass eine Phasenlage der durch das Codeelement erzeugten Tangentialkomponente des Magnetfeldes bezogen auf die Referenzposition bestimmt werden kann. Dabei sollte weiterhin vorzugsweise der Magnetfeldsensor an der Referenzposition ausgerichtet sein, und sich der Kodierungsversatz des Codeelements der Absolutspur gegenüber der Referenzposition in einem aus den Messsignalen des Magnetfeldsensors mittels des hieraus ermittelbaren Phasenwinkels bestimmen lassen.

In dem Zusammenhang hat es sich weiterhin als vorteilhaft erwiesen, wenn jeder Magnetfeldsensor zwei Paare von Wheatstone-Halbbrücken als Magnetfeldsensorelemente umfasst, wobei ein erstes Paar der ersten Messposition und ein zweites Paar der zweiten Messposition zugeordnet ist. Die erste Messposition ist durch ein eine erste Halbbrücke des ersten Paares und eine erste Halbbrücke des zweiten Paares definiert, die einen Sinus- und einen Kosinuswert liefern, wobei hierzu die beiden Halbbrücken der beiden Paare um 90° = $\lambda/4$ in Versetzungsrichtung versetzt anzuordnen wären. Die zweite Messposition ist durch eine zweite Halbbrücke des ersten Paares und eine zweite Halbbrücke des zweiten Paares definiert und kann um 180° von der ersten Messposition versetzt angeordnet sein, und jeweils einen weiteren Sinus- und Kosinuswert (mit 90° Abstand der beiden Halbbrücken) liefern, Dabei ist es nicht zwingend erforderlich, dass die jeweiligen einem Magnetfeldsensor zugeordneten Wheatstone-Halbbrücken in einer Reihe in der Verlaufsrichtung der Maßverkörperung bzw. der Spur angeordnet sind. Sie können auch mit einem seitlichen Versatz zueinander angeordnet sein. Vorteilhafterweise können in der Verlaufsrichtung der Maßverkörperung betrachtet abwechselnd eine Wheatstone-Halbbrücke des ersten Paares und eine Wheatstone-Halbbrücke des zweiten Paares angeordnet sein. Die zwei Paare der Wheatstone-Halbbrücken sind also sozusagen verschachtelt angeordnet, um insbesondere auch eine Differenzmessung innerhalb eines Paars von Wheatstone-Halbbrücken zu ermöglichen. Ein solches Paar von Wheatstone-Halbbrücken bildet somit eine Wheatstone-Vollbrücke, wobei jede Vollbrücke einen Sinuswert bzw. Kosinuswert liefert. Der Abstand zwischen zwei Halbbrücken des ersten und des zweiten Paares entspricht vorzugsweise einem Viertel des Abstands benachbarter Referenzpositionen, und weiterhin vorteilhaft umfasst jeder Magnetfeldsensor zwei Paare von Halbbrücken, wobei der Abstand jedes Paares einer Halbbrücke dem halben Abstand benachbarter Referenzpositionen entspricht. Jedes Paar von Halbbrücken dient zur Ermittlung eines Sinus- bzw. Kosinuswerts, wobei deren Messsignale trigonometrisch zur Bestimmung des Phasenversatzes des Codeelements verrechnet werden. Hierzu ist vorzugsweise eine nicht dargestellte Auswerteeinheit vorzusehen, die eingerichtet ist, eine Arkustangens-Auswertung der Messsignale der beiden Halbbrücken vorzunehmen.

Grundsätzlich genügen zwei Vollbrücken zur Auswertung eines Codes mit zwei Zeichen (Binärcodes), aber auch zur Auswertung höherwertiger Codes mit mehr als zwei Zeichen. Vorteilhaft können allerdings auch mehr als vier Wheatstone-Halbbrücken je Magnetfeldsensor vorgesehen sein, beispielsweise um einen Code mit mehr als zwei Zeichen auslesen zu können. Bei genügend hoher Auflösungsgenauigkeit eines Phasenversatzes eines Codeelements können beispielsweise drei, vier oder mehr Zeichen als unterschiedliche Kodierungsversatzgrößen eines Codeelements zur Referenzposition dargestellt werden, wodurch die Gesamtzahl von Codeelementen und damit die Baugröße des Absolutwertgebers verringert werden kann.

Gemäß einer weiteren vorteilhaften Ausführungsform ist zwischen zwei benachbarten Codeelementen ein jeweiliger Trennbereich vorgesehen. Damit ergibt sich eine Struktur, in der abwechselnd in Richtung der Spur ein magnetisches Codeelement und ein unmagnetisches Trennelement angeordnet werden kann. Dies ist insbesondere bei der Verwendung von weichmagnetischen Zahnstrukturen oder Lochblechen gegeben, kann aber auch bei den hartmagnetischen Codeelementen eingesetzt werden. Die Länge der Trennbereiche, in der Verlaufsrichtung der jeweiligen Spur betrachtet, kann gleich der Länge der Codeelemente in Verlaufsrichtung der Spur sein, aber auch kleiner gewählt sein. Es versteht sich, dass die Größe der Trennbereiche an den maximal vorgesehenen Kodierungsversatz angepasst werden muss. Der Trennbereich kann zur Verbesserung der Signalqualität und Robustheit ausreichend groß gewählt werden, um Magnetfeldverzerrungen benachbarter Codeelemente zu unterdrücken. Bevorzugt kann als Größe des Trennbereichs, bezogen auf eine vorgenannte Wellenlänge $\lambda$ eine Trennbereichsgröße von 10° oder mehr, insbesondere 36° oder mehr.

Die vorgenannte Ausführungsform eignet sich zum Einsatz von sogenannten Schwachfeldsensoren, die für die Detektion einer einzelnen Magnetfeldkomponente ausgelegt sind, vorzugsweise einer in Spurverlaufsrichtung ausgerichteten Magnetfeldkomponente ausgelegt sind, wobei deren Ausgangssignal proportional zur Amplitude des Magnetfeldes ist. Allerdings ist es vorteilhaft auch möglich, sogenannte Starkfeldsensoren einzusetzen. Diese zeichnen sich durch eine Detektion des Winkels des Magnetfeldes gegenüber der Lage des Magnetfeldsensors aus. In diesem Fall wären vorteilhaft 2P+1 Starkfeldwinkelsensoren in jeder Magnetfeldsensoranordnung einzusetzen. Ist der Magnetfeldsensor in seinen Abmessungen klein verglichen mit dem Codeelement, dann ist eine Starkfeldanordnung möglich, da diese unmittelbar den Winkel der Streufeldkomponente bestimmt. Diese Starkfeldsensoranordnung ist günstig bei hartmagnetischen Codeelementen ohne Messmagnetfeld. In der Regel wird beim Einsatz von Starkfeldsensoren eine Längensensor-Anordnung bevorzugt. Hierbei ist die Absolutspur gerade ausgerichtet. Damit kann man eine Phasenlage der durch die Codeelemente erzeugten Streumagnetfeldes in einer linearen Spurverlaufsrichtung bestimmen und es lässt sich sehr einfach mittels der Starkfeldsensoren als Magnetfeldsensoren ein Phasenwinkel $\alpha$ eines Codeelements der Absolutspur und einen Phasenwinkel $\beta$ des benachbarten Codeelements der Referenzspur ermitteln. Die Winkeldifferenz $\beta-\alpha$ gibt ein Maß für den Kodierungsversatz zwischen den beiden Codeelementen an.

Insbesondere wenn die Codeelemente als Permanentmagnete ausgeformt sind, d.h. einen aktiven Maßstab ausbilden, der abwechselnd Nord- und Südpole umfasst, kann vorteilhafterweise ein Starkfeld bzw. Winkelsensor eingesetzt werden. Das Streufeld dreht sich aus Sicht der Magnetfeldsensorelemente beim relativen Verschieben von Codeelementen gegenüber der Magnetfeldsensoranordnung.

Die Codelemente können geometrische Dimensionen in Zentimeter - oder Millimetergröße aufweisen und an die jeweilige Messaufgabe angepasst sein. Die Codeelemente können allerdings soweit verkleinert werden, dass diese eine Breite von $50\,\mu$m oder kleiner haben können, und die Anzahl von Zeichen P eines Codewortes kann 8 oder mehr sein. Je nach relativer Lage der Halbbrücken gegenüber den Codeelementen, können alle Halbbrücken eines Magnetfeldsensors oder nur eine Untergruppe der Halbbrücken eines Magnetfeldsensors ausgewertet werden.

ZEICHNUNGEN

Weitere Vorteile ergeben sich aus der Zeichnung und der zugehörigen Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird diese Merkmale zweckmäßigerweise auch einzeln betrachten und zu sinnvollen weiteren Kombinationen zusammenfassen.

Es zeigt:

**Fig. 1** eine perspektivische Darstellung, sowie Draufsicht und Seitenansicht auf ein Ausführungsbeispiel eines Absolutwertgebers;

**Fig. 2a, 2b** schematische Darstellungen von Maßverkörperungen eines Absolutwertgebers gemäß einem ersten Ausführungsbeispiel;

**Fig. 3** eine schematische Darstellung einer Maßverkörperung eines Absolutwertgebers gemäß einem nicht beanspruchten zweiten Ausführungsbeispiel; und

**Fig. 4** eine schematische Darstellung einer Maßverkörperung eines Absolutwertgebers gemäß einem dritten Ausführungsbeispiel;

**Fig. 5** eine Darstellung der Magnetfeldkonfiguration eines Absolutwertgebers gemäß des dritten Ausführungsbeispiels;

**Fig. 6** eine Darstellung der Magnetfeldkonfiguration eines Absolutwertgebers gemäß des ersten Ausführungsbeispiels;

**Fig. 7** eine Darstellung der Magnetfeldkonfiguration eines Absolutwertgebers gemäß eines vierten Ausführungsbeispiels;

**Fig. 8a, 8b** eine schematische Teildarstellung einer Magnetfeldsensoranordnung eines Absolutwertgebers gemäß eines weiteren Ausführungsbeispiels mit versetzten Relativpositionen von Magnetsensoranordnung zur Maßverkörperung;

**Fig. 9** eine schematische Gesamtdarstellung einer Magnetfeldsensoranordnung eines Absolutwertgebers gemäß des Ausführungsbeispiels der Fig. 7.

In den Figuren sind gleiche oder gleichartige Elemente mit gleichen Bezugsziffern gekennzeichnet.

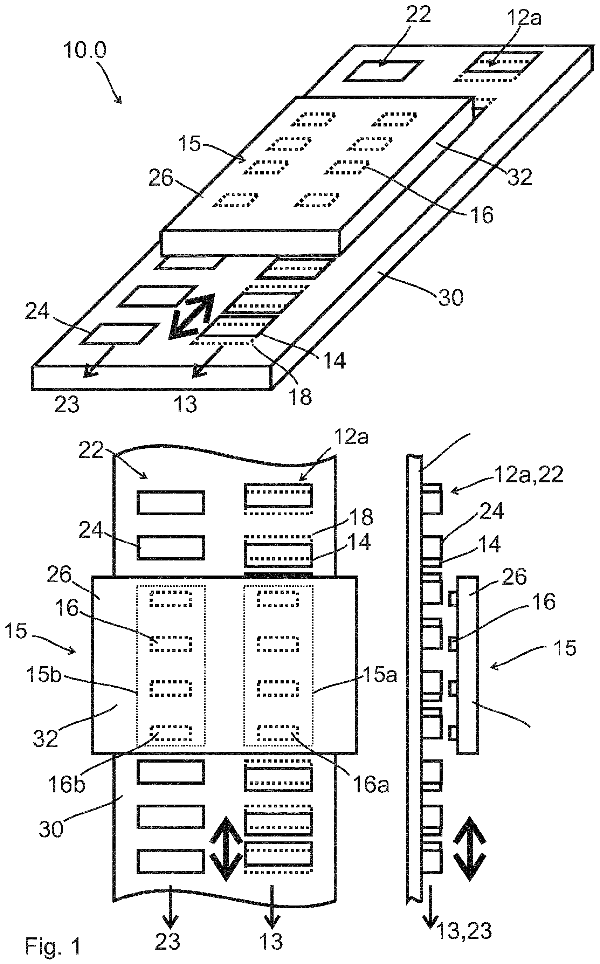

Fig. 1 zeigt perspektivisch und in einer Drauf- und Seitenansicht ein Ausführungsbeispiel 10.0 der Erfindung. Der Absolutwertgeber 10.0 umfasst einen beweglichen ersten Körper 30, der eine erste Maßverkörperung 12a und eine zweite Maßverkörperung 22 trägt. Auf einem zweiten Körper 32 ist eine Magnetfeldsensoranordnung 15 vorgesehen, deren magnetfeldsensitiven Sensorflächen in Richtung der Maßverkörperungen 12a, 22 ausgerichtet sind.

Der erste Körper 30 kann in dieser Ausführungsform relativ zum zweiten Körper 32 linear bewegt werden. Auf dem ersten Körper 30 sind in Bewegungsrichtung zwei parallel zueinander ausgerichtete Reihen von Codeelementen 14 der ersten Maßverkörperung 12a und Codeelementen 24 der zweiten Maßverkörperung 22 angeordnet. Die erste Reihe von Codeelementen 14 definiert eine Absolutspur 13, die zweite Reihe von Codeelementen 24 definiert eine Inkrementalspur 23.

Perspektivisch oberhalb des ersten Körpers 30, der die Maßverkörperungen 12a und 22 trägt, ist gegenüberliegend zu den Codeelementen 14, 24 eine Magnetfeldsensoranordnung 15 des zweiten Körpers 32 angeordnet. Die Magnetfeldsensoranordnung 15 weist eine Mehrzahl von Magnetfeldsensoren 16 auf, die in zwei Reihen 15a, 15b parallel zueinander angeordnet sind, und den Codeelementen 14, 24 der parallelen Maßverkörperungen 12a, 22 zugeordnet sind. Somit ergeben sich zwei Unteranordnungen 15a, 15b des Magnetfeldsensors 15 mit jeweils mehreren Magnetfeldsensoren 16, einer ersten Unteranordnung 15a mit Magnetfeldsensoren 16a, die zur Abtastung der Codeelemente 14 der ersten Maßverkörperung 12 entlang der Absolutspur 13 dienen, und einer zweiten Unteranordnung 15b mit Magnetfeldsensoren 16b, die zur Abtastung der Codeelemente 24 der zweiten Maßverkörperung 22 entlang der Inkrementalspur 23 dienen. Ein zum Betrieb des Absolutwertgebers 10 erforderliches Messmagnetfeld kann beispielsweise durch eine hartmagnetische Eigenschaft der Codeelemente 14, 24 erzeugt werden, oder durch einen externen Magneten (nicht dargestellt) oder eine Magnetanordnung, der beispielsweise am zweiten Körper 32 angeordnet ist, erzeugt werden. Der das Messmagnetfeld erzeugende Magnet kann permanentmagnetisch sein, oder als Elektromagnet ausgebildet sein.

Die Codeelemente 24 der zweiten Maßverkörperung 22 sind entlang der Absolutspur 23 in ihren Längspositionen äquidistant zueinander angeordnet und markieren Referenzpositionen, gegen die eine relative Lage von Codeelementen 14 der ersten Maßverkörperung 12a der Absolutspur bestimmbar ist. Im gezeigten Ausführungsbeispiel ist ein Kodierungsversatz der Codeelemente 14 vorgesehen, der in Richtung der Absolutspur 13 ausgerichtet und positiv oder negativ zur Referenzposition, die durch die Codeelemente 24 definiert ist, definiert ist. Gleichwohl kann der Kodierungsversatz lediglich nur in einer Richtung zur Referenzposition ausgerichtet sein, oder kann beispielsweise mehrere Schrittweiten des Kodierungsversatzes zur höherwertigen Informationscodierung als einem zweistelligen Binärkode aufweisen.

In den nachfolgenden Figuren wird auf eine Darstellung der Körper 30, 32 verzichtet.

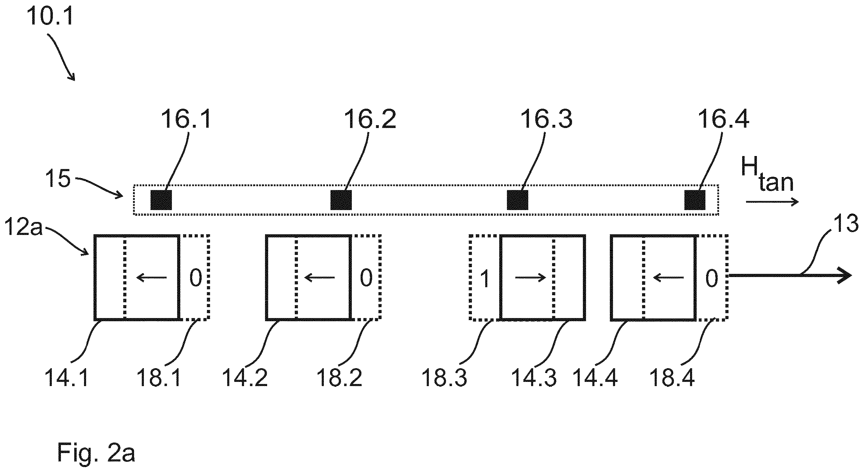

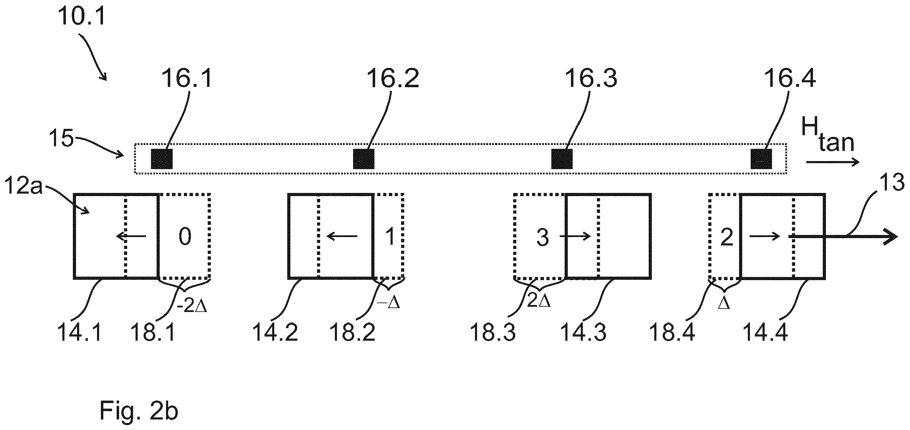

In den Figs. 2a und 2b sind zwei verschiedene Varianten zur Darstellung von Positionsinformationen mittels der ersten Maßverkörperung 12 in einer Seitenansicht dargestellt.

In der Fig. 2a ist ein erstes Ausführungsbeispiel 10.1 eines Absolutwertgebers dargestellt. Der Absolutwertgeber 10.1 umfasst eine Maßverkörperung 12a, die eine Absolutspur 13 definiert, und die eine Beeinflussung eines Magnetfeldes bewirkt, das von der Magnetfeldsensoranordnung 15 gemessen wird. Die Maßverkörperung 12a kann hierzu einzelne Codeelemente 14.1, 14.2, 14.3 und 14.4 umfassen, die ferromagnetisch sind, und die Magnetfelder eines nicht dargestellten Elektro- oder Permanentmagneten führen und ablenken können, oder die Codeelemente 14.1-14.4 weisen eine eigene beispielsweise permanentmagnetische Magnetisierung auf. Das Magnetfeld ist vorzugsweise statisch, kann allerdings auch zumindest einen zeitabhängigen Anteil aufweisen. Die Magnetfeldsensoranordnung 15 umfasst eine Gruppe von Magnetfeldsensoren 16.1 bis 16.4, wobei jeder Magnetfeldsensor 16.1-16.4 räumlich zu einem Codeelement 14.1-14.4 benachbart ist. Die Magnetfeldsensoren 16 sind derart eingestellt, dass sie eine Tangentialkomponente des durch die Codeelemente 14 gestreuten Magnetfelds in Absolutrichtung 13 bestimmen können. Vorzugsweise kann eine nicht dargestellte Auswertung der Magnetfeldsensoren 16 vorgenommen werden, die eine Phasenlage der Tangentialkomponente in Richtung der Absolutspur ausgibt.

Sofern die Codeelemente 14 alle äquidistant zueinander angeordnet sind, würde bei gleicher relativer Position der Magnetfeldsensoren 16 zu den Codeelementen 14 jeder Magnetfeldsensor 16 die gleiche Phasenlage der Tangentialkomponente des Magnetfeldes messen. Variieren die Abstände der Codeelemente 14.1-14.4 zueinander, so treten Unterschiede in der Phasenlage auf, aus der eine Positionsinformation extrahierbar ist. Dabei zeigt Fig. 2a eine Darstellung von Positionsinformationen mittels eines Binärcodes, der pro Codeelement 14 entweder eine "0" oder "1" darstellt. Hierzu ist in der dargestellten Ausführungsform gestrichelt zu jedem Codeelement 14.1 bis 14.4 zugehörige Referenzpositionen 18.1 bis 18.4 dargestellt. Würden sich alle Codeelemente 14 an der Stelle der Referenzposition 18 befinden, würden identische Phaseninformationen an allen Magnetfeldsensoren 16 gemessen werden. Es sind die ersten beiden Codeelemente 14.1 und 14.2 und das vierte Codeelement 14.4 um einen definierten (festen) Kodierungsversatz bzgl. der Absolutspur 13 nach hinten versetzt, wodurch eine binäre NULL "0" codiert ist. Das Codeelement 14.3 ist um einen weiteren definierten (festen) Kodierungsversatz nach vorne in Richtung der Absolutspur 13 versetzt, wodurch eine binäre EINS "1" codiert ist. Hierdurch ergeben sich gegenüber der Referenzposition 18 Phasenabweichungen, aus denen ein Codewort als Binärcode "0010" herausgelesen werden kann, das eine Absolutposition codieren kann. Zur Auswertung ist die Kenntnis der Referenzposition 18 hilfreich, wobei allerdings über einen relativen Vergleich der Phasenlagen zueinander eine Absolutinformation zuverlässig extrahiert werden kann. Hierzu ist es sinnvoll, dass der Binärcode aus gemischten Einzelinformationen zusammengesetzt ist, so dass eine Phasenänderung bezüglich zumindest eines Codeelements 14 pro Binärwort detektierbar ist, so dass nur Codewörter zugelassen werden sollten, die mindestens eine 1 und mindestens eine 0 enthalten.

Dabei können statt einem Binärcode auch weitere Werte, zum Beispiel verschieden große Abstände vorgesehen sein, so dass ein relativ kurzes Codewort eine exakte Positionsbestimmung ermöglicht. Dies ist in Fig. 2b veranschaulicht, die ein weiteres Ausführungsbeispiel 10.1 eines Absolutwertgebers zeigt und grundsätzlich der Darstellung in der Fig. 2a entspricht. Abweichend davon können die Codeelemente 14 bezüglich der Referenzposition 18 verschiedene Kodierungsversätze aufweisen. Dargestellt sind exemplarisch vier Kodierungsversätze $-2\Delta$, $-\Delta$, $\Delta$, $2\Delta$, die entsprechende Informationen "0", "1", "2" und "3" in einem Quaternärsystem codieren. Im gezeigten Beispiel ist die Positionsinformation 0132 der vier Codeelemente 14.1 bis 14.4 wiedergegeben. Da jedes Codeelement vier verschiedene Informationen wiedergeben kann, können mit vier Codeelemente $4^4 = 256$ Positionsinformationen im Quaternärsystem wiedergegeben werden, während im Binärsystem nach Fig. 2a nur 16 Positionsinformationen wiedergegeben werden können. Somit kann durch Auflösung mehrerer Kodierungsversätze die Menge der gleichzeitig zu erfassenden Codeelement-Positionen deutlich verringert bzw. eine höhere Auflösungsgenauigkeit erreicht werden.

Da in den Figs. 2a, 2b ein jeweiliges Codewort eine Länge von 4 Bit aufweist und daher maximal 16 unterschiedliche Codewörter darstellbar sind, können mit den dargestellten Maßverkörperungen 12a, 12b mit vier Codeelementen 14.1 bis 14.4 maximal 16 Absolutpositionen eindeutig kodiert werden.

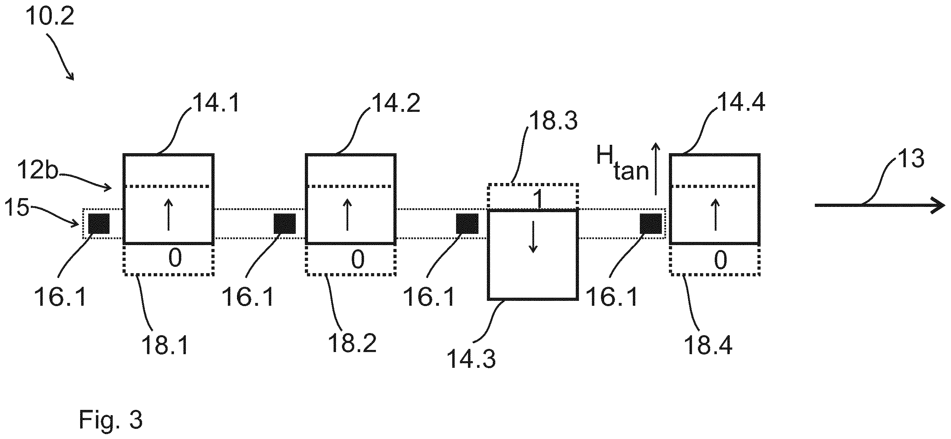

Fig. 3 zeigt einen Absolutwertgeber 10.2 in einer Draufsicht, welcher dem Absolutwertgeber 10.1 von Fig. 2a in wesentlichen Merkmalen entspricht. Anstelle der ersten Maßverkörperung 12a gemäß dem ersten Ausführungsbeispiel (Fig. 2a) ist hier eine Maßverkörperung 12b gemäß einem zweiten Ausführungsbeispiel vorgesehen, die eine Absolutspur 13 definiert. Bei der Maßverkörperung 12b verläuft der Kodierungsversatz der ersten Codeelemente 14.1 bis 14.4 nicht in der Verlaufsrichtung der Absolutspur 13, sondern senkrecht zu dieser. So sind im zweiten Ausführungsbeispiel die Kodierungselemente 14.1, 14.2 und 14.4 bezogen auf die Ausrichtung der Zeichnung nach oben verschoben und kodieren das Zeichen NULL, während das Codeelement 14.3 bezogen auf die Ausrichtung der Zeichnung nach unten verschoben ist und das Zeichen EINS kodiert. Die Sensoranordnung befindet sich oberhalb bzw. unterhalb der Maßverkörperung und ist so ausgelegt, dass sie den Versatz in die obere bzw. untere Richtung detektieren kann. Vorteilhafterweise misst die Magnetfeldsensoranordnung eine Streufeldkomponente, die in Bildebene liegt und senkrecht zur Absolutspur 13 ausgerichtet ist.

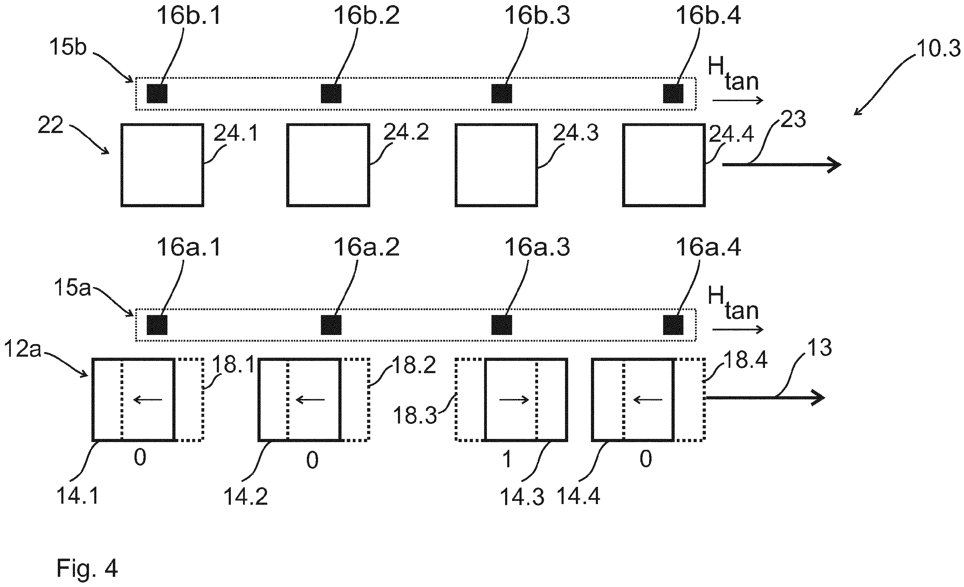

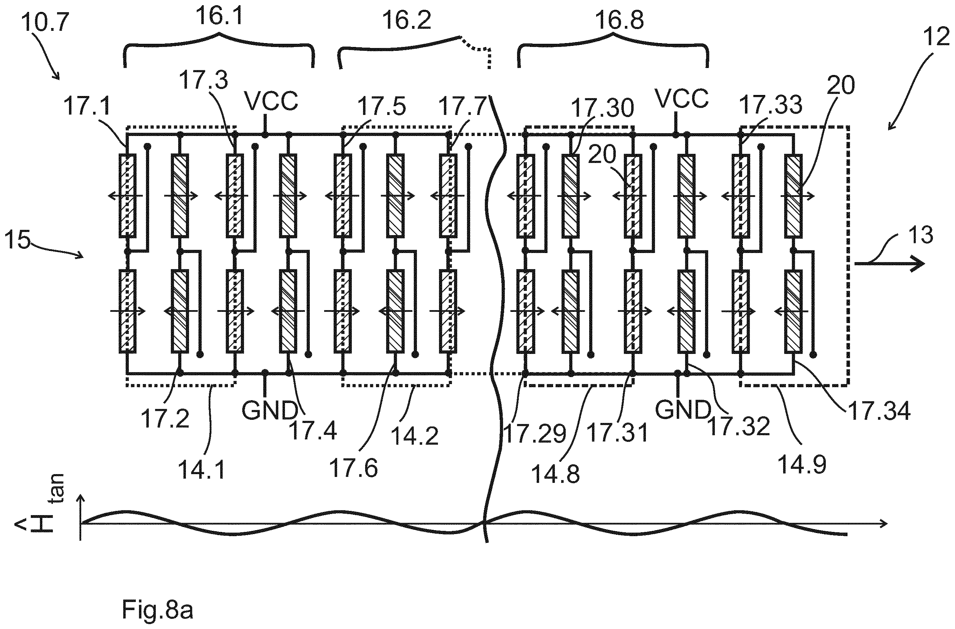

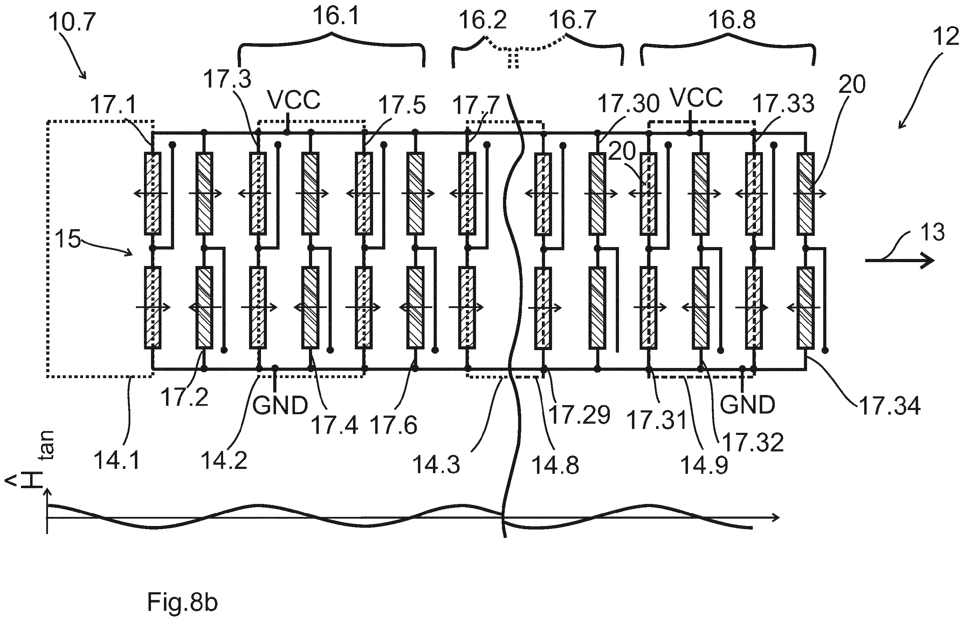

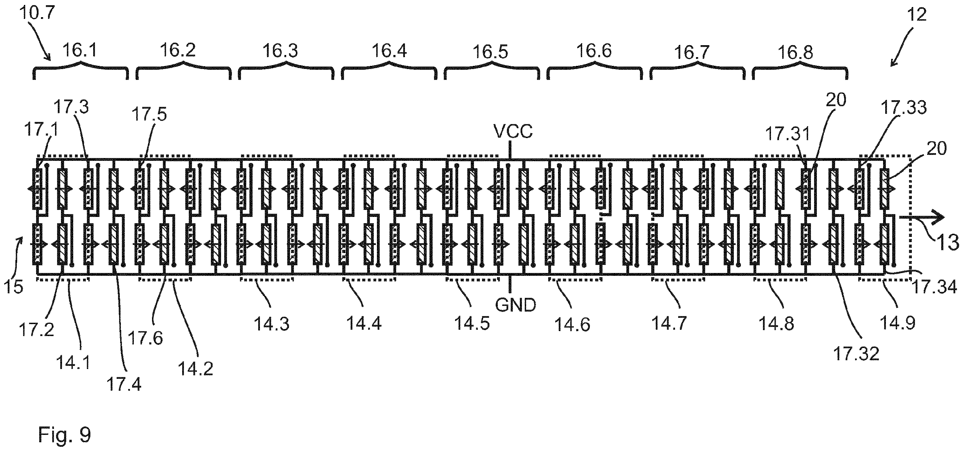

Mit Bezug auf Fig. 4 wird nun eine Funktionsweise eines dritten Ausführungsbeispiels eines Absolutwertgebers 10.3 näher erläutert. Der Absolutwertgeber 10.3 umfasst eine erste Maßverkörperung 12a gemäß des ersten Ausführungsbeispiel, die eine Absolutspur 13 definiert und eine zweite Maßverkörperung 22, die eine Inkrementalspur 23 definiert. Jede der beiden Spuren 13, 23 ist in einer Seitenansicht gezeigt, jedoch ist es in der Praxis so, dass die beiden Spuren 13, 23 parallel nebeneinander in einer Ebene angeordnet sind. In Fig. 4 sind sie der Übersichtlichkeit übereinander angeordnet. Jede Maßverkörperung 12a, 22 wird durch eine jeweilige Magnetfeldsensoranordnung 15a, 15b abgetastet, deren Aufbau in den späteren Figuren 8 und 9 im Detail erläutert ist, und die ausgelegt ist, eine durch die Codeelemente 14 der Maßverkörperung 12a und Codeelemente 24 der Maßverkörperung 22 verursachte Phasenlagenänderung einer Tangentialkomponente des Magnetfeldes entlang der Absolutspur 13 bzw. der Inkrementalspur 23 zu detektieren. Aus Gründen der Übersichtlichkeit sind die genauen Magnetfeldsensoranordnungen in den Fig. 2 bis 4 nicht dargestellt. Vereinfacht kann angenommen werden, dass sich innerhalb der Fläche eines jeden Codeelements 14.1 bis 14.4., 24.1 bis 24.4 ein jeweiliger Magnetfeldsensor 16 befindet, der eine Magnetfeld-Phaseninformation des zugeordneten Codeelements 14, 24 auslesen kann.

Die erste Maßverkörperung 12a umfasst mehrere erste magnetische Codeelemente, von denen lediglich die Codeelemente 14.1 bis 14.4 dargestellt sind. Die zweite Maßverkörperung 22 umfasst mehrere zweite magnetische Codeelemente, von denen in Fig.4 lediglich die Codeelemente 24.1 bis 24.4 dargestellt sind. Die erste Maßverkörperung 12a bildet eine Absolutspur 13, während die zweite Maßverkörperung 22 eine Inkrementalspur 23 darstellt.

Die Codeelemente 24.1 bis 24.4 sind äquidistant und ohne seitlichen Versatz auf der Inkrementalspur 23 angeordnet. Die zweiten Codeelemente 24.1 bis 24.4 definieren die Längspositionen auf der Absolutspur 13 von Referenzpositionen 18.1 bis 18.4, die in Fig. 3 und 4 durch gestrichelte Linien dargestellt sind. Die Referenzpositionen 18.1 bis 18.4 weisen somit dieselbe Längsposition auf wie die zweiten Codeelemente 24.1 bis 24.4.

Jedes erste Codeelement 14.1 bis 14.4 ist jedoch nicht genau auf der zugehörigen Referenzposition 18.1 bis 18.4 angeordnet, sondern weist einen jeweiligen Kodierungsversatz in Bezug auf die jeweilige Referenzposition 18.1 bis 18.4 auf. Während das Codeelement 14.3 in Richtung einer durch den Richtungspfeil der Absolutspur 13 definierten Richtung versetzt ist, sind die Codeelemente 14.1, 14.2 und 14.4 in entgegengesetzter Richtung versetzt. Dem jeweiligen Kodierungsversatz kann ein entsprechendes Zeichen eines Codes zugeordnet sein. Im Ausführungsbeispiel gemäß Fig. 4 ist der Code ein Binärcode, wobei dem Codeelement 14.3 das Zeichen EINS und den Codeelementen 14.1, 14.2 und 14.4 das Zeichen NULL zugeordnet ist. Im dargestellten Fall ist ein Codewort als Binärcode 0010 codiert, der einer Absolutposition zugeordnet ist. Durch Erhöhen der Anzahl der betrachteten Codeelemente kann je nach Einsatzspezifikation eine Vergrößerung der Länge der Maßverkörperung erreicht werden, in der die Absolutposition eindeutig ist.

Durch eine jeweilige Magnetfeldsensoranordnung werden, bezogen auf das Ausführungsbeispiel von Fig. 4 jeweils vier erste Codeelemente 14.1 bis 14.4 bzw. vier zweite Codeelemente 24.1 bis 24.4 simultan abgetastet. Aus dem Kodierungsversatz der ersten Codeelemente 14.1 bis 14.4 in Bezug auf die Referenzpositionen 18.1 bis 18.4 bzw. die zweiten Codeelemente 24.1 bis 24.4 kann ein jeweiliges aus vier Zeichen bestehendes Codewort dekodiert werden. Dieses Codewort ändert sich, wenn die Verstellposition der Maßverkörperung zu den Magnetfeldsensoranordnungen sich verändert, weil durch eine neue Position andere erste und zweite Codeelemente durch die Sensoreinheiten erfasst und dekodiert werden. Durch die Wahl einer geeigneten, durch die Maßverkörperung 12a repräsentierten Zeichenfolge wird für jedes Inkrement der Maßverkörperungen 12a bzw. 22 ein anderes Codewort kodiert, so dass sich daraus die Absolutposition ermitteln lässt.

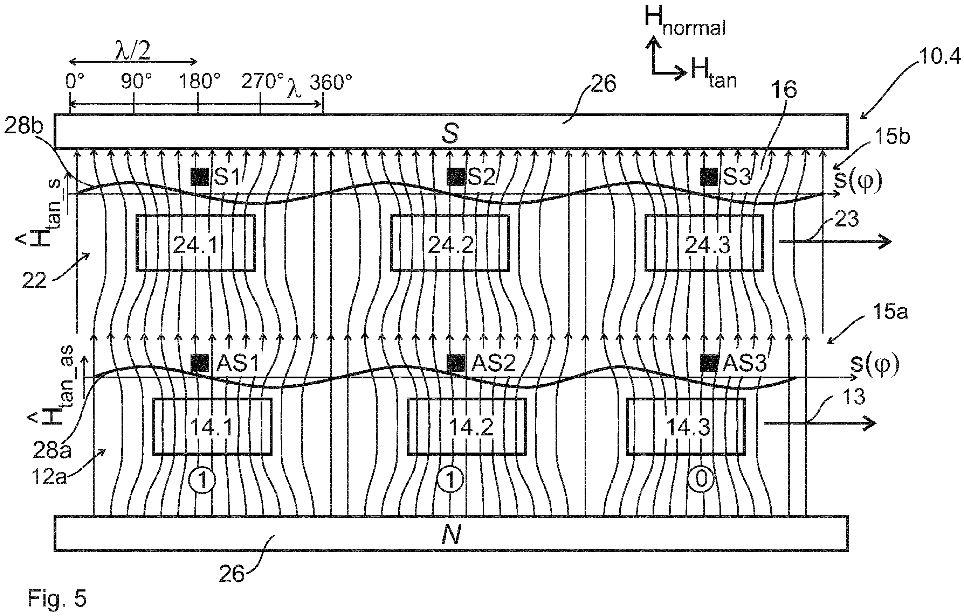

In der Fig. 5 ist ein weiteres Ausführungsbeispiel 10.4 eines Absolutwertgebers dargestellt. Wieder ist eine Seitenansicht gewählt. Dieser umfasst eine erste Maßverkörperung 12a, die die Absolutspur 13 definiert, und parallel hierzu eine zweite Maßverkörperung 22, die die Inkrementalspur 23 definiert. Zur vereinfachten Darstellung sind Absolutspur 13 und Inkrementalspur 23 übereinander dargestellt, wobei ein eingezeichneter Magnetfluß die Codeelemente 14, 24 beider Spuren 13, 23 nacheinander durchdringt. In der Regel sind diese allerdings in einer gemeinsamen Ebene parallel zueinander angeordnet und werden parallel von einem Magnetfluß normal zur Ebene durchdrungen, wobei die Magnetfeldsensoranordnung 15 oberhalb der Ebene beide Spuren 13, 23 überdeckt und abtastet. Die beiden Maßverkörperung sind im Bereich einer ersten und einer zweiten Magnetfeldsensoranordnung 15a, 15b von Messmagnetpolen 26 umfasst, die ein durch Feldlinien dargestelltes Messmagnetfeld erzeugen, welches durch die Codeelemente 14, 24 der Maßverkörperungen 12a, 12b abgelenkt wird. Die Messmagnetpole 26 können Permanentmagnetpole sein, oder Pole einer Elektromagnetkonfiguration, und können vorteilhafterweise ein statisches Magnetfeld bereitstellen, wobei aber auch ein zeitveränderliches Magnetfeld denkbar wäre. Die Codeelemente 14, 24 weisen ferromagnetische Eigenschaften auf und werden aufgrund ihrer weichmagnetischen Eigenschaften durch das Messmagnetfeld temporär magnetisiert. Auch können diese beispielsweise Ausnehmungen in einem ferromagnetischen Material darstellen. Sie müssen lediglich ausgelegt sein, eine Beeinflussung des Magnetflusses zwischen den Messmagnetpolen 26 zu bewirken. Während die Codeelemente 24.1, 24.2, 24.3, etc. entlang der Inkrementalspur 23 äquidistant angeordnet sind, sind die Codeelemente 14.1, 14.2, 14.3, etc. entlang der Absolutspur 13 jeweils um eine vordefinierte Schrittweite relativ gegenüber den Codeelementen 24 nach vorne oder hinten versetzt. Die Versetzungen codieren eine binäre Information EINS oder NULL, in diesem Ausführungsbeispiel entspricht eine positive Versetzung entlang der Absolutspur 13 eine EINS und eine negative Versetzung eine NULL. Jedem Codeelement 24 der zweiten Maßverkörperung 22 ist entlang der Inkrementalspur 23 ein Magnetfeldsensor 16 S1, S2, S3 etc. einer zweiten Magnetfeldsensoranordnung 15b zugeordnet, und an gleicher Position entlang der Absolutspur 13 jedem Codeelement 14 ein Magnetfeldsensor 16 AS1, AS2, AS3 etc. einer ersten Magnetfeldsensoranordnung 15a. Zur Illustration der Wirkungsweise der Magnetfeldmessung durch die erste und zweite Magnetfeldsensoranordnung 15a, 15b ist über der Maßverkörperung 22 und der Maßverkörperung 12a jeweils ein Amplitudenverlauf 28a, 28b einer Tangentialkomponente $H_{tan}$ des sich zwischen den Messmagnetpolen 26 ausbildenden Magnetfeldes dargestellt. Der Amplitudenverlauf 28b weist entlang der Inkrementalspur 23 eine Periode der Wellenlänge $\lambda$ auf, die ebenso ausgedrückt werden kann durch eine Phase von 360° oder $2\pi$. Eine entsprechende Skala ist ebenfalls dargestellt. Während der Amplitudenverlauf 28b der Tangentialkomponente des Magnetfeldes entlang der äquidistant angeordneten Codeelemente 24 der Inkrementalspur sinusförmig ist, und somit jeder Magnetfeldsensor S1, S2, S3 etc. einen praktisch identischen Sinusverlauf beim Bewegen der Maßverkörperung 22 messen würde, ist der Amplitudenverlauf 28a der Tangentialkomponente entlang der Absolutspur 12a aufgrund der nicht-äquidistant angeordneten Codeelemente 14 beim Übergang der binären Informationen EINS auf NULL verzerrt, und dadurch die ermittelte Phasenlagen des Amplitudenverlaufs 28a, die von den Magnetfeldsensoren AS1, AS2, AS3 der ersten Magnetfeldsensoranordnung 15a etc. gemessen werden, gegenüber den Phasenlagen des Amplitudenverlaufs 28b, die von den Magnetfeldsensoren S1, S2, S3 der Magnetfeldsensoranordnung 15b gemessen werden, verschieden. Der Unterschied der Phasenwinkel zwischen den Magnetfeldsensorgruppen 15a, 15b wird zur Auswertung der binären Codeworte genutzt, die eine Absolutposition der Codeelemente 14 angeben.

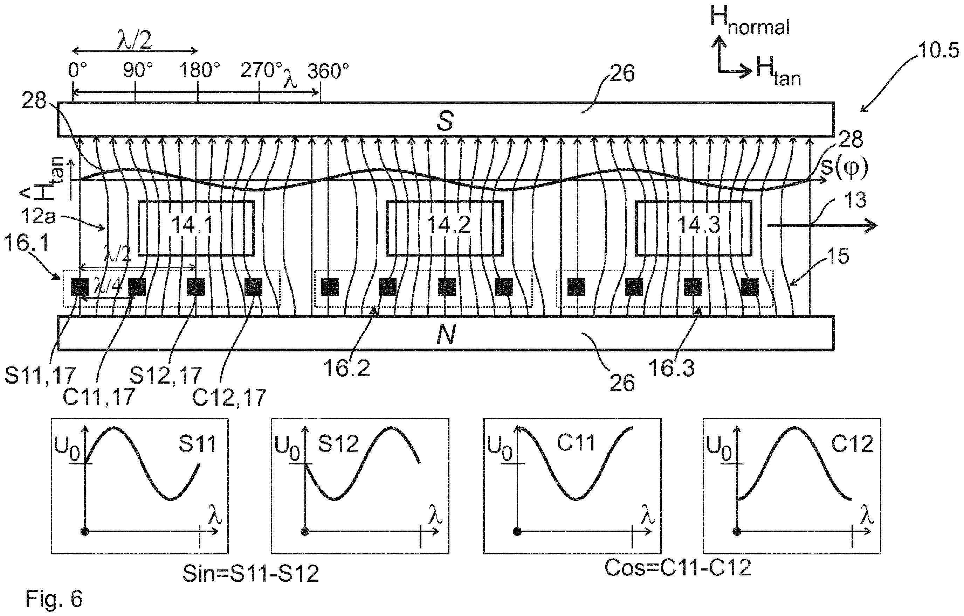

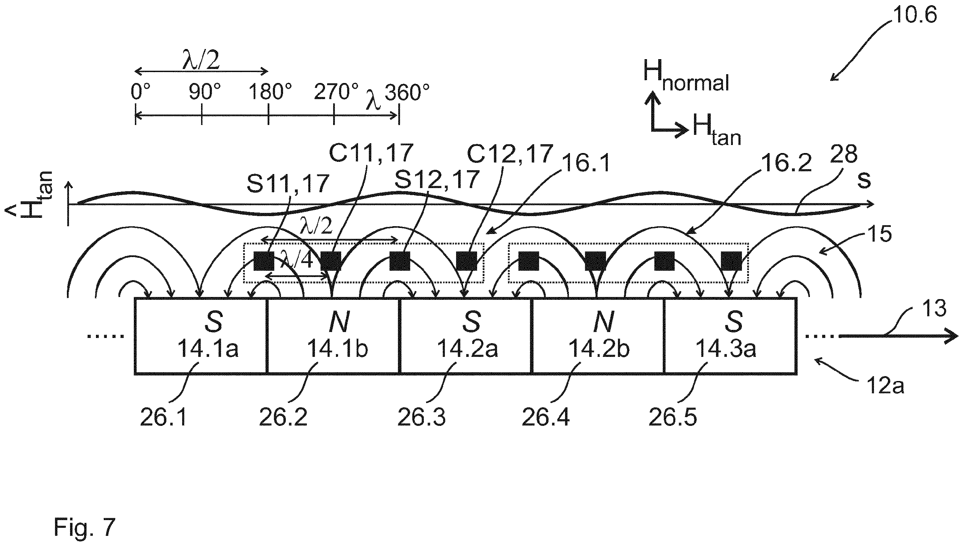

In den weiteren Figs. 6 und 7 wird die Ermittlung des Kodierungsversatzes anhand von Ausführungsformen erläutert, wobei auf eine Darstellung eines Kodierungsversatzes von Referenzposition der Codeelemente 14 aus Vereinfachungsgründen verzichtet wird.

Die Fig. 6 stellt in Anlehnung an das Ausführungsbeispiel 10.1 der Fig. 2 ein weiteres Ausführungsbeispiel 10.5 mit einer Maßverkörperung 12a dar, die eine Absolutspur 13 definiert, und deren relative Abstände der Codeelemente 14 untereinander ein PRBS-Codewort wiedergeben, das eine Absolutposition markiert. Die Codeelemente 14 sind zwischen zwei Messmagnetpolen 26 angeordnet, wobei zur Illustration ein Verlauf von Magnetlinien skizziert ist, um die Beeinflussung des Magnetfeldes durch die Codeelemente 14 darzustellen. Ohne die Codeelemente wären die Magnetfeldlinien senkrecht und die Tangentialkomponente $H_{tan} = 0$. Durch die Anwesenheit der Codeelemente werden die Magnetfeldlinien verzerrt, wodurch eine messbare Tangentialkomponente mit Amplitudenverlauf 28 (illustrierend dargestellt) entsteht. Entlang der Codeelemente ist der Amplitudenverlauf der magnetischen Tangentialkomponente $H_{tan}$ mit einer mittleren Wellenlänge $\lambda$ und zugehörigem Phasenwinkel dargestellt, der von einer Magnetfeldsensoranordnung 15 gemessen wird. Die Magnetfeldsensoranordnung 15 weist hierzu äquidistant mit der Periode $\lambda$ angeordnete Magnetfeldsensoren 16.1, 16.2, 16.3 und weitere, nicht dargestellte Magnetfeldsensoren aus, deren Anzahl der Bittiefe des PRBS-Codes entspricht. Die Magnetfeldsensoren 16 sind äquidistant mit der Periode $\lambda$ angeordnet, und können dadurch jeweils einem Codeelement 14 zugeordnet werden. Sie sind dafür ausgelegt, die Amplitude der Tangentialkomponente $H_{tan}$ zu messen. Bei äquidistanter Anordnung benachbarter Codeelementen 14 entsprechend dem Abstand einer Wellenlänge $\lambda$, tritt praktisch kein Phasenunterschied im Amplitudenverlauf der Tangentialkomponente $H_{tan}$ benachbarter Codeelemente 14 auf, so dass auf eine identische binäre Information der benachbarten Codeelemente 14 geschlossen werden kann. Werden Phasensprünge benachbarter Codeelemente 14 gemessen, so liegen unterschiedliche Binärinformationen der Codeelement 14 vor, so dass durch den Vergleich der Phasen benachbarter Codeelemente 14 das eine Absolutposition angebende Codewort ermittelt werden kann.

Zur Ermittlung der Phaseninformation der Codeelemente 14 durch die Magnetfeldsensoren 16 und zur Verbesserung der Messgenauigkeit bei der Phasenermittlung umfasst jeder Magnetfeldsensor 16 mehrere, vorteilhafterweise vier Halbbrücken 17, deren näherer Aufbau in den Figs. 8 und 9 dargestellt ist. Jeweils zwei Halbbrücken 17 sind in einem Abstand von λ/2 angeordnet und messen einen Sinusanteil S11, S12 der Tangentialkomponente und zwei Halbbrücken 17 sind gegenüber diesen Halbbrücken S11, S12 um einen Abstand von λ/4 angeordnet, und weisen wiederum einen Abstand von λ/2 zueinander auf, so dass ein Kosinusanteil C11, C12 der Tangentialkomponente gemessen werden kann. Zur Verbesserung der Signalgenauigkeit werden die Messsignale der beiden Sinus-Halbbrücken S11, S12 und der beiden Kosinus-Halbbrücken C11, C12 phasenrichtig miteinander kombiniert. Der Phasenwinkel φ und die relative Lageposition des Codeelements 14 im Bereich des Magnetfeldsensors 16 ergibt sich somit durch:

$$\varphi = \arctan\left(\frac{S11 - S12}{C11 - C12}\right), \qquad s = \lambda \cdot \frac{\varphi}{360°}$$

Durch den Vergleich der relativen Lagepositionen s jedes Codeelements 14 im Messbereich des Magnetfeldsensors 16 kann die binäre Information ausgelesen und bei einer genügend hohen Anzahl von Magnetfeldsensoren 16 in der Magnetfeldsensoranordnung 15 die Absolutposition bestimmt werden. Dies kann durch eine nicht näher beschriebene Auswerteeinheit bestimmt werden, die die erforderliche Arkustangensoperation vornimmt und den Kodierungsversatz bestimmt, und hieraus das Zeichen dekodiert. Durch simultane Auswertung aller Zeichen des Codes kann anschließend eine Zuordnung des PRBS-Codeworts mit einer Absolutwertskala erfolgen, wodurch die Absolutposition bestimmt ist.

Die Fig. 7 zeigt angelehnt an das Ausführungsbeispiel 10.5 der Fig. 6 eine weitere Ausführungsform 10.6, wobei abweichend von dem in Fig. 6 dargestellten Absolutwertgeber 10.5 die Codeelemente 14 sich aus jeweils zwei benachbarten, alternierend magnetisch polarisierten Messmagnetpolen 26 ergeben. Eine Kette von alternierend polarisierten Messmagnetpole 26.1 bis 26.5 definiert somit eine Absolutspur 13, wobei jeweils zwei benachbarte Messmagnetpole 26 ein Codeelement 14 ergeben. Somit ergibt sich eine Zuordnung der Messmagnetpole 26.1 und 26.2 zu einem zusammengesetzten Codeelement 14.1a, 14.1b. Entsprechendes gilt für Codeelement 14.2 und folgende. Eine Codierung kann durch unterschiedliche Längen der Messmagnetpole 26 erfolgen. Die Magnetfeldsensoranordnung 15 umfasst eine Reihe äquidistant angeordneter Magnetfeldsensoren 16.1, 16.2 und weitere, wobei die Anzahl der Magnetfeldsensoren die Bittiefe, d.h. der digitalen Auflösung der Lageinformation definiert. Jeder Magnetfeldsensor 16.1 umfasst vier Halbbrücken S11, S12, C11, C12, die in der vorgehend beschriebenen Weise die relative Position des Codeelements 14 innerhalb des Erfassungsbereichs des Magnetfeldsensors 16 bestimmen und somit die digitale Information des Codeelements 14 ermitteln kann.

Figs.8a, 8b und 9 zeigen einen Absolutwertgeber 10.7 gemäß eines weiteren Ausführungsbeispiels, wie er beispielsweise in den Ausführungen 10.5 und 10.6 der Figs. 6 und 7 eingesetzt werden kann. Fig.8a und 8b zeigt hierbei ein Teilabschnitt und Fig. 9 eine vollständige Darstellung des Absolutwertgebers 10, wobei zwischen Fig. 8a und Fig. 8b eine Relativverschiebung der Codeelemente 14 gegenüber der Magnetfeldsensoranordnung 15 von λ/2 stattfindet. Der Absolutwertgeber 10.7 umfasst eine erste Maßverkörperung 12 mit einer Vielzahl von ersten magnetischen Codeelementen, von denen für das Ausführungsbeispiel lediglich neun zueinander benachbarte erste Codeelemente 14.1 bis 14.9 betrachtet werden, wobei in Figs. 8a, 8b lediglich die ersten Codeelemente 14.1, 14.2, 14.8 und 14.9 dargestellt sind und die ersten Codeelemente 14.3. bis 14.7 aus Gründen der Übersichtlichkeit weggelassen wurden. Fig. 9 zeigt dagegen die gesamte Ausdehnung des Absolutwertgebers 10.7.

Der Absolutwertgeber 10.7 umfasst ferner eine erste Magnetfeldsensoranordnung 15, welche zum Abtasten der ersten Codeelemente ausgebildet ist. Die erste Magnetfeldsensoranordnung 15 umfasst insgesamt 34 Halbbrücken 17.1 bis 17.34, welche jeweils zwei gegensinnig verschaltete magnetoresistive Widerstandselemente 20 umfassen. In Figs. 8a, 8b sind lediglich die Halbbrücken 17.1 bis 17.7 und 17.29 bis 17.34 dargestellt und die Halbbrücken 17.8 bis 17.28 aus Gründen der Übersichtlichkeit weggelassen. Die gegensinnige Verschaltung ist durch kleine Pfeile im Bereich der Widerstandselemente 20 angedeutet. Der Pfeil bedeutet, dass der Widerstand des Widerstandselementes proportional zu dem Tangentialfeld $H_{tan}$ sinkt, wenn das Tangentialfeld in Richtung des Pfeils zeigt. Die Halbbrücken 17.1 bis 17.32 sind jeweils einem von insgesamt acht Magnetfeldsensoren 16.1 bis 16.8 zugeordnet, so dass jeder der Magnetfeldsensoren 16.1 bis 16.8 jeweils vier Halbbrücken umfasst. Zwei weitere Halbbrücken, nämlich die Halbbrücken 17.33 und 17.34, gehören zum letzten Magnetfeldsensor 16.8 und dienen der Eindeutigkeit seines Messwertes.

Die Messbrücken 17.1 bis 17.34 sind mit einer gemeinsamen Versorgungsspannung VCC und einer gemeinsamen Masse GND verbunden. Ferner können jeweilige Messsignale bzw. Messspannungen an Messpunkten der Halbbrücken 17.1 bis 17.34 abgegriffen werden, die von 1 bis 34 durchnummeriert sind. Die jeweiligen Leitungen können mit einer nicht dargestellten Auswerteeinheit verbunden sein.

Bei den Magnetfeldsensoren 16.1 bis 16.8 bilden die Halbbrücken mit ungeradem Bezugszeichenindex ein erstes Halbbrückenpaar, und die Halbbrücken mit geradem Index ein zweites Halbbrückenpaar. Der sinusförmige Verlauf der Tangentialkomponente des durch die Codeelemente 14 erzeugten magnetischen Streufeldes ist ebenfalls dargestellt.

Dazu bilden in der in Fig. 8a dargestellten Relativposition der Codeelemente 14 zu den Halbbrücken 17 bei dem Magnetfeldsensor 16.1 die Halbbrücken 17.1 und 17.3 das erste Halbbrückenpaar zur Messung beispielsweise einer Sinuskomponente und die Halbbrücken 17.2 und 17.4 das zweite Halbbrückenpaar zur Messung einer Kosinuskomponente des Magnetfeldsensors 16.1. Der Magnetfeldsensor 16.2 umfasst die Halbbrücken 17.5 bis 17.8, und der Magnetfeldsensor 16.8 die Halbbrücken 17.29 bis 17.32. Der Abstand zwischen zwei benachbarten Halbbrücken der beiden Paare jedes Magnetfeldsensors 16, beispielsweise Halbbrücken 17.1 zu 17.2, beträgt genau ein Viertel des Abstandes zwischen zwei benachbarten (nicht versetzten) Codeelementen 14.1 bis 14.8 (d.h. Referenzpositionen) - und somit einen Abstand von λ/4, und der Abstand der Halbbrücken jeweils eines Paares von Halbbrücken einer Messbrücke jedes Magnetfeldsensors 16, beispielsweise 17.1 und 17.3 bzw. 17.2 und 17.4, beträgt die Hälfte des Abstandes der Referenzpositionen - d.h. einen Abstand von λ/2.

Wie in Fig. 8a gut zu erkennen ist, befinden sich die Kanten des Codeelements 14.1 gerade im Bereich der Halbbrücken 17.1 und 17.3 und die Halbbrücken 17.2 und 17.4 liegen in der Mitte des Codeelements 14.1 bzw. zwischen zwei Codeelementen 14.1 und 14.2. Die Halbbrücke 17.2 befindet sich in einer Mittelposition des Codeelements 14.1, während die Halbbrücke 17.4 sich innerhalb eines Trennbereichs zwischen den Codeelementen 14.1 und 14.2 befindet. In Fig. 8b sind die Codeelemente 14 gegenüber dem Magnetfeldsensoranordnung 15 um einen Abstand von λ/2, also der Breite eines Codeelementes 14 nach links verschoben. Zur Bestimmung der sich nun einstellenden Phasenlagen der durch die Codeelemente 14 erzeugten Streufelder, können nun - um eine identische Halbbrückenzuordnung zum Streufeld wie in Fig. 8a zu erreichen - die Halbbrücken 17.3 bis 17.6 zum Magnetfeldsensor 16.1 zugeordnet werden, ebenso die Halbbrücken 17.7 bis 17.10 zum Magnetfeldsensor 16.2 und schließlich die Halbbrücken 17.31 bis 17.34 zum Magnetfeldsensor 16.8.

Hieraus wird deutlich, dass bei einer Relativbewegung der Maßverkörperungen 12, 22 gegenüber der Magnetfeldsensoranordnung 15 zur Optimierung der Sensorgenauigkeit eine Zuordnung der Halbbrücken 17 zu den Magnetfeldsensoren 16, die beispielsweise jeweils 4 nebeneinander liegende Halbbrücken 17 zur Phasenwinkelbestimmung umfassen, verändert werden kann. Insoweit kann durch eine elektronische "Umschaltung" der Zuordnung der Halbbrücken 17 zu den Magnetfeldsensoren 16 die Magnetfeldsensoranordnung 15 "virtuell" um eine Strecke von zumindest λ/4 oder λ/2 gegenüber der Maßverkörperung 12, 22 "verfahren" werden, um eine verbesserte Sensorgenauigkeit zu erzielen.

Da mit Bezug auf Figs. 8a, 8b und 9 nur der prinzipielle Aufbau der Magnetfeldsensoranordnung 15 erläutert werden soll, sind die Codeelemente 14.1 bis 14.9 ohne einen jeweiligen Kodierungsversatz dargestellt. Exemplarisch für den ersten Magnetfeldsensor 16.1 sei die Funktionsweise näher erläutert. Das erste Halbbrückenpaar mit den Halbbrücken 17.1 und 17.3 bildet eine Vollbrücke, deren Messspannung an den Messpunkten 1 und 3 abgegriffen werden kann. Das zweite Messbrückenpaar mit den Halbbrücken 17.2 und 17.4 bildet ebenfalls eine Vollbrücke, deren Messspannung an den Messpunkten 2 und 4 abgegriffen werden kann. Die Vollbrücken sind so ausgelegt, dass eine Art Differenzmessung erfolgen kann. Wie vorab schon gezeigt, kann mittels einer Arkustangens-Berechnung für jedes Codeelement die Phasenlage bestimmt werden.

Befinden sich die Magnetfeldsensoren 16.1. - 16.8 gerade über den Codeelementen 14.1. - 14. 8 so ist eine eindeutige Dekodierung möglich. Befinden sich die Magnetfeldsensoren 16.1. - 16.8 aber gerade zwischen den Codeelementen 14.1. - 14.9. so können die Übergange zwischen unterschiedlichen Versätzen nicht eindeutig ausgelesen werden. In diesem Fall werden den Magnetfeldsensoren 16.1. - 16.8 Halbbrücken zugeordnet, die gerade um λ/2 versetzt sind. Beispielsweise bezieht sich der Magnetfeldsensor 16.8. nicht auf die Halbbrücken von 17.29- 17.32 sondern alternativ auf die Halbbrücken 17.31. -17.34, dies wird im Vergleich der Figs. 8a zu 8b verdeutlicht.

Denn immer dann, wenn die beiden benachbarten Codeelemente einen unterschiedlichen Kodierungsversatz aufweisen, z.B. φ+ bei 14.2 und φ- bei 14.3 wird der Sensor 16.2. mit den Halbbrücken 17.5, 17.6, 17.7, 17.8 beim Überschreiten von 14.2. auf 14.3. einen Bereich überqueren, wo der messbare Versatz gerade der Mittelwert zwischen φ+ und φ- ist. Hier kann keine Entscheidung getroffen werden, ob es sich um eine NULL oder EINS handelt. Das liegt insbesondere daran, dass der Sensor 16.2. sich gerade zwischen zwei Codeelementen befindet und nicht weiß, ob er zum linken oder zum rechten Codeelement gehört. Mithilfe geeigneter Kriterien kann die Auswerteeinheit festlegen, ob in dieser Situation nur ein Signalwert auf Basis der Halbbrücke 17.6 und der Halbbrücken 17.5und ggf. 17.8 ausgewertet wird.

Alternativ können anstelle der Halbbrücken 17.5. - 17.8. auch die Halbbrücken 17.7., 17.8., 17.9. und 17.10 für den Magnetfeldsensor 16.2 herangezogen werden. Diese vier Halbbrücken können in diesem Fall eindeutig dem Codeelement 14.3. zugeordnet werden. Analog können die Halbbrücken 17.3.- 17.6. dem Codeelement 14.2. zugeordnet werden. Somit kann den an einer ersten oder an einer zweiten Messposition erzeugten Messsignalen vertraut werden. Weiterhin lässt sich durch eine Auswertung bzw. einen Vergleich der an den Halbbrücken 17.3 bis 17.10 bzw. den Messpunkten 3 bis 10 erfassten Messspannungen ein Kodierungsversatz für die Codeelemente 14.2 und 14.3 ermitteln. Diese geänderte Zuordnung ist beispielhaft in Fig. 8b dargestellt.

Die übrigen Magnetfeldsensoren 16.1, und 16.3 bis 16.8 arbeiten entsprechend, so das mittels der Magnetfeldsensoranordnung 15 für eine jeweilige Absolutposition jeweils acht Codeelemente simultan abgetastet werden können. Unter der Annahme, dass die Codeelemente einen Binärcode kodieren, können maximal 256 verschiedene Codewörter bzw. Absolutpositionen ermittelt werden.

Die relativen Größen der Codeelemente 14.1 bis 14.9., 24.1 bis 24.4 sind hier nur beispielhaft wiedergegeben. So können die Zwischenräume zwischen einzelnen Codeelementen, d.h. die Größe der Trennbereiche, auch relativ gesehen bezogen auf die Codeelemente größer oder kleiner sein. Die Codeelemente können rechteckig oder quadratisch sein. Auch der Abstand zwischen der Absolutspur und der Inkrementalspur kann größer oder kleiner als in den Ausführungsbeispielen dargestellt sein.

**Bezugszeichenliste**

| | |
|---|---|
| 10 | Absolutwertgeber |
| 12, 12a, 12b | erste Maßverkörperung |
| 13 | Absolutspur |
| 14.1 - 14.9 | erstes Codeelement |
| 15, 15a, 15b | Magnetfeldsensoranordnung |
| 16.1 - 16.8 | Magnetfeldsensor |
| 17.1 - 17.34 | Halbbrücke |
| 18.1 - 18.4 | Referenzposition |
| 20 | magnetoresistives Widerstandselement |
| 22 | zweite Maßverkörperung |
| 23 | Inkrementalspur |
| 24.1 - 24.4 | zweites Codeelement |
| 26 | Messmagnetpol |
| 28 | Amplitudenverlauf einer Tangentialkomponente |
| 30 | erster Körper |
| 32 | zweiter Körper |

**Patentansprüche**

**1.** Magnetischer Absolutwertgeber (10.0, 10.1, 10.2, 10.3, 10.4, 10.5, 10.6, 10.7) zur Bestimmung der Absolutposition zweier bezüglich einer Winkelposition oder einer Längenposition relativ zueinander verstellbarer Körper (30, 32), mit wenigstens einer, eine Absolutspur (13) definierenden, ersten Maßverkörperung (12, 12a, 12b) auf dem ersten Körper (30) in Richtung einer Verstellrichtung der Körper (30, 32), welche eine Vielzahl von ersten Codeelementen (14.1 - 14.9) mit magnetischen Eigenschaften umfasst, mit zumindest einer ersten Magnetfeldsensoranordnung (15) zum Abtasten von durch die erste Maßverkörperung (12, 12a, 12b) verursachten magnetischen Streufeldern auf dem zweiten Körper (32), und mit einer Auswerteeinheit, welche zum Empfangen von Messsignalen von der ersten Magnetfeldsensoranordnung (15, 15a) eingerichtet ist, wobei jedes der ersten Codeelemente (14.1 - 14.9) um einen jeweiligen Kodierungsversatz in Längsrichtung der Absolutspur (13) versetzt, insbesondere in Längsrichtung der Absolutspur (13) symmetrisch versetzt, zu einer dem jeweiligen ersten Codeelement (14.1 - 14.9) zugeordneten virtuellen Referenzposition (18.1 - 18.4) in einer 1:1 Beziehung angeordnet ist, wobei die virtuellen Referenzpositionen (18.1 - 18.4) äquidistant und versatzfrei längs der Absolutspur (13) definiert sind, wobei jedes erste Codeelement (14.1 - 14.9) zumindest auf der Grundlage seines Kodierungsversatzes ein bestimmtes Zeichen eines N Zeichen umfassenden Codes kodiert, wobei jeweils P aufeinander folgende Codeelemente (14.1 - 14.9) ein jeweiliges Codewort kodieren, wobei jedes Codewort innerhalb der ersten Maßverkörperung (12, 12a, 12b) einmalig ist und eine jeweilige Absolutposition repräsentiert, wobei die erste Magnetfeldsensoranordnung (15, 15a) eine Anzahl von ersten Magnetfeldsensoren (16.1 - 16.8) umfasst, welche derart angeordnet sind, dass die ersten Magnetfeldsensoren (16.1 - 16.8) für eine jeweilige Position der ersten Maßverkörperung (12, 12a, 12b) mehrere benachbarte erste Codeelemente (14.1 - 14.9) gleichzeitig abtasten, sodass jeder Magnetfeldsensor (16.1 - 16.8) ein jeweiliges erstes Codeelement (14.1 - 14.9) abtastet, wobei die Anzahl von ersten Magnetfeldsensoren (16.1 - 16.8) gleich oder größer der Anzahl P ist, und wobei die Auswerteeinheit dazu eingerichtet ist, auf der Grundlage der Messsignale den Kodierungsversatz jedes abgetasteten ersten Codeelements (14.1 - 14.9) und das durch diesen Kodierungsversatz kodierte Zeichen zu ermitteln und auch ohne eine relative Positionsänderung der Codeelemente (14.1 - 14.9) gegenüber der ersten Magnetfeldsensoranordnung (15, 15a), eine Absolutposition zu bestimmen.

**2.** Absolutwertgeber (10.0, 10.1, 10.2, 10.3, 10.4, 10.5, 10.6, 10.7) nach einem der vorhergehenden Ansprüche, **da-**

**durch gekennzeichnet, dass** ferner eine, eine Inkrementalspur (23) definierende zweite Maßverkörperung (22) mit einer Vielzahl von äquidistanten, zweiten magnetischen Codeelementen (24.1 - 24.4) und eine zweite Magnetfeldsensoranordnung (15b) zum Abtasten der zweiten Maßverkörperung (22) vorgesehen ist, wobei die Inkrementalspur (23) parallel beabstandet zur Absolutspur (13) verläuft, wobei jede virtuellen Referenzposition (18.1 - 18.4) bezüglich ihrer Längsposition auf der Absolutspur (13) durch die Längsposition zumindest eines zugeordneten zweiten Codeelements (24.1 - 24.4) auf der Inkrementalspur (23) bestimmt ist, und wobei die Auswerteeinheit dazu eingerichtet ist, Messsignale von der zweiten Magnetfeldsensoranordnung (15b) zu empfangen und auf deren Grundlage die virtuellen Referenzposition (18.1 - 18.4) zu ermitteln.

3. Absolutwertgeber (10.0, 10.1, 10.2, 10.3, 10.4, 10.5, 10.6, 10.7) nach einem der vorhergehenden Ansprüche, **dadurch gekennzeichnet, dass** die Kodierung eines jeweiligen Zeichens auf der Grundlage eines Betrags und/oder einer Richtung des Kodierungsversatzes erfolgt.

4. Absolutwertgeber (10.0, 10.1, 10.2, 10.3, 10.4, 10.5, 10.6, 10.7) nach Anspruch 3, **dadurch gekennzeichnet, dass** jedes erste und/oder jedes zweite Codeelement (14.1 - 14.9, 24.1 - 24.4) einen Permanentmagneten umfasst, wobei die magnetische Polarität eines jeweiligen Codeelements (14.1 - 14.9, 24.1 -24.4) durch die zugeordnete Magnetfeldsensoranordnung (15, 15a, 15b) detektierbar ist, und dass die Kodierung eines jeweiligen Zeichens zusätzlich auf der Grundlage der Polarität erfolgt.

5. Absolutwertgeber (10.0, 10.1, 10.2, 10.3, 10.4, 10.5, 10.6, 10.7) nach einem der vorhergehenden Ansprüche, **dadurch gekennzeichnet, dass** der Kodierungsversatz eine Querkomponente entlang der Absolutspur (13) umfasst.

6. Absolutwertgeber (10.0, 10.1, 10.2, 10.3, 10.4, 10.5, 10.6, 10.7) nach einem der vorhergehenden Ansprüche, **dadurch gekennzeichnet, dass** zumindest die erste Magnetfeldsensoranordnung (15, 15a, 15b) wenigstens einen Magnetfeldsensor (16.1 - 16.8) umfasst, wobei jeder Magnetfeldsensor (16.1 - 16.8) mehrere, insbesondere zwei oder vier magnetoresistive Widerstandselemente (20) umfasst, welche zu wenigstens einer Wheatstone-Messbrücke, insbesondere einer Wheatstone-Halbbrücke (17.1. -17.34) oder einer Wheatstone-Vollbrücke, zusammengeschaltet sind.

7. Absolutwertgeber (10.0, 10.1, 10.2, 10.3, 10.4, 10.5, 10.6, 10.7) nach Anspruch 6, **dadurch gekennzeichnet, dass** die Widerstandselemente (20) richtungssensitive AMR-, GMR-, oder TMR-Widerstandselemente sind, deren Widerstand sich linear mit der Magnetfeldkomponente parallel zur Versatzrichtung ändert, bzw. deren Widerstand abhängt vom Winkel des Magnetfeldes.

8. Absolutwertgeber (10.0, 10.1, 10.2, 10.3, 10.4, 10.5, 10.6, 10.7) nach einem der vorhergehenden Ansprüche, **dadurch gekennzeichnet, dass** die Magnetfeldsensoranordnung (15, 15a, 15b) wenigstens einen Magnetfeldsensor (16.1 - 16.8) umfasst, wobei jeder Magnetfeldsensor (16.1 - 16.8) zumindest zum Erzeugen eines ersten Messsignals für eine erste Messposition und eines zweiten Messsignals für eine von der ersten Messposition in einer Verlaufsrichtung der Absolutspur (13) beabstandeten zweiten Messposition eingerichtet ist, wobei der Abstand der Messpositionen kleiner ist als der Abstand benachbarter virtueller Referenzpositionen (18.1 - 18.4), insbesondere kleiner oder gleich dem halben Abstand benachbarter virtueller Referenzpositionen (18.1 - 18.4), insbesondere gleich einem Viertel des Abstands benachbarter virtueller Referenzpositionen (18.1 - 18.4), und wobei die Auswerteeinheit dazu eingerichtet ist, unter Berücksichtigung eines vorgegebenen Kriteriums den Kodierungsversatz auf der Grundlage des ersten oder des zweiten Messsignals zu ermitteln.

9. Absolutwertgeber (10.0, 10.1, 10.2, 10.3, 10.4, 10.5, 10.6, 10.7) nach Anspruch 6 und 8, **dadurch gekennzeichnet, dass** jeder Magnetfeldsensor (16.1 - 16.8) wenigstens zwei Paare von Wheatstone-Halbbrücken (17.1. - 17.34) umfasst, wobei ein erstes Paar der ersten Messposition und ein zweites Paar der zweiten Messposition zugeordnet ist.

10. Absolutwertgeber (10.0, 10.1, 10.2, 10.3, 10.4, 10.5, 10.6, 10.7) nach Anspruch 9, **dadurch gekennzeichnet, dass** in einer Verlaufsrichtung der Maßverkörperung (12, 12a, 12b, 22) betrachtet abwechselnd eine Wheatstone-Halbbrücke (17.1. - 17.34) des ersten Paares und eine Wheatstone-Halbbrücke (17.1. - 17.34) des zweiten Paares angeordnet ist.

11. Absolutwertgeber (10.0, 10.1, 10.2, 10.3, 10.4, 10.5, 10.6, 10.7) nach einem der vorhergehenden Ansprüche, **dadurch gekennzeichnet, dass** zwischen zwei benachbarten Codeelementen (14.1 - 14.9, 24.1 - 24.4) ein jeweiliger Trennbereich vorgesehen ist.

**Claims**

1. Magnetic absolute value encoder (10.0, 10.1, 10.2, 10.3, 10.4, 10.5, 10.6, 10.7) for the determination of the absolute position of two bodies (30, 32) displaceable relative to one another in respect of an angular position or a longitudinal position, with at least one first material scale (12, 12a, 12b) defining an absolute track (13) on the first body (30) in the direction of a displacement direction of the bodies (30, 32), said material scale comprising a plurality of first code elements (14.1 - 14.9) with magnetic properties, with at least one first magnetic field sensor arrangement (15) for sampling magnetic leakage fields on the second body (32) caused by the first material scale (12, 12a, 12b), and with an evaluation unit that is configured to receive measurement signals from the first magnetic field sensor arrangement (15, 15a), wherein each of the first code elements (14.1 - 14.9) is arranged offset by a respective encoding offset in the longitudinal direction of the absolute track (13), in particular symmetrically offset in the longitudinal direction of the absolute track (13), with respect to a virtual reference position (18.1 - 18.4) assigned to the first code element (14.1 - 14.9) in a 1:1 relationship, wherein the virtual reference positions (18.1 - 18.4) are defined as equidistant and having no offset along the absolute track (13), wherein each first code element (14.1 - 14.9) encodes, at least on the basis of its encoding offset, one specific character of a code comprising N characters, wherein P successive code elements (14.1 - 14.9) encode one code word in each case, wherein each code word is unique within the first material scale (12, 12a, 12b) and represents a respective absolute position, wherein the first magnetic field sensor arrangement (15, 15a) comprises a number of first magnetic field sensors (16.1 - 16.8), which are arranged such that the first magnetic field sensors (16.1 - 16.8) simultaneously sample a plurality of adjacent first code elements (14.1 - 14.9) for a respective position of the first material scale (12, 12a, 12b) such that each magnetic field sensor (16.1 - 16.8) samples a respective first code element (14.1 - 14.9), wherein the number of first magnetic field sensors (16.1 - 16.8) is equal to or greater than the number P, and wherein the evaluation unit is configured to ascertain, on the basis of the measurement signals, the encoding offset of each sampled first code element (14.1 - 14.9) and the character encoded by this encoding offset and to determine an absolute position even without a relative position change of the code elements (14.1 - 14.9) relative to the first magnetic field sensor arrangement (15, 15a).

2. Absolute value encoder (10.0, 10.1, 10.2, 10.3, 10.4, 10.5, 10.6, 10.7) according to any of the preceding claims, **characterized in that** further a second material scale (22) with a plurality of equidistant, second magnetic code elements (24.1 - 24.4) that defines an incremental track (23), and a second magnetic field sensor arrangement (15b) for sampling the second material scale (22) is provided, wherein the incremental track (23) runs parallel to and at a distance from the absolute track (13), wherein each virtual reference position (18.1 - 18.4) is determined in respect of its longitudinal position on the absolute track (13) by the longitudinal position of at least one assigned second code element (24.1 - 24.4) on the incremental track (23), and wherein the evaluation unit is configured to receive measurement signals from the second magnetic field sensor arrangement (15b) and to ascertain the virtual reference position (18.1 - 18.4) on their basis.

3. Absolute value encoder (10.0, 10.1, 10.2, 10.3, 10.4, 10.5, 10.6, 10.7) according to any of the preceding claims **characterized in that** the encoding of a respective character takes place on the basis of an amplitude and/or a direction of the encoding offset.

4. Absolute value encoder (10.0, 10.1, 10.2, 10.3, 10.4, 10.5, 10.6, 10.7) according to claim 3, **characterized in that** each first and/or each second code element (14.1 - 14.9, 24.1 - 24.4) comprises a permanent magnet, wherein the magnetic polarity of a respective code element (14.1 - 14.9, 24.1 - 24.4) is detectable by the assigned magnetic field sensor arrangement (15, 15a, 15b), and that the encoding of a respective character takes place additionally on the basis of the polarity.

5. Absolute value encoder (10.0, 10.1, 10.2, 10.3, 10.4, 10.5, 10.6, 10.7) according to any of the preceding claims, **characterized in that** the encoding offset comprises a transverse component along the absolute track (13).

6. Absolute value encoder (10.0, 10.1, 10.2, 10.3, 10.4, 10.5, 10.6, 10.7) according to any of the preceding claims, **characterized in that** at least the first magnetic field sensor arrangement (15, 15a, 15b) comprises at least one magnetic field sensor (16.1 - 16.8), wherein each magnetic field sensor (16.1 - 16.8) comprises a plurality, in particular two or four, magnetoresistive resistor elements (20) that are interconnected to form at least one Wheatstone measuring bridge, in particular a half Wheatstone bridge (17.1 - 17.34) or a full Wheatstone bridge.

7. Absolute value encoder (10.0, 10.1, 10.2, 10.3, 10.4, 10.5, 10.6, 10.7) as claimed in claim 6, **characterized in that** the resistor elements (20) are direction-sensitive AMR, GMR or TMR resistor elements whose resistance changes linearly with the magnetic field component parallel to the direction of offset, or whose resistance depends on the angle of the magnetic field.

8. Absolute value encoder (10.0, 10.1, 10.2, 10.3, 10.4, 10.5, 10.6, 10.7) according to any of the preceding claims, **characterized in that** the magnetic field sensor arrangement (15, 15a, 15b) comprises at least one magnetic field sensor (16.1 - 16.8), wherein each magnetic field sensor (16.1 - 16.8) is configured at least to generate a first measurement signal for a first measurement position and a second measurement signal for a second measurement position at a distance from the first measurement position in an extension direction of the absolute track (13), wherein the distance of the measurement positions is smaller than the distance of adjacent virtual reference positions (18.1 - 18.4), in particular smaller than or equal to half the distance of adjacent virtual reference positions (18.1 - 18.4), in particular equal to a quarter of the distance of adjacent virtual reference positions (18.1 - 18.4), and wherein the evaluation unit is configured to ascertain the encoding offset on the basis of the first or of the second measurement signal, taking a predefined criterion into consideration.

9. Absolute value encoder (10.0, 10.1, 10.2, 10.3, 10.4, 10.5, 10.6, 10.7) according to claim 6 and 8, **characterized in that** each magnetic field sensor (16.1 - 16.8) comprises at least two pairs of half Wheatstone bridges (17.1 - 17.34), wherein a first pair is assigned to the first measurement position and a second pair to the second measurement position.

10. Absolute value encoder (10.0, 10.1, 10.2, 10.3, 10.4, 10.5, 10.6, 10.7) according to claim 9, **characterized in that**, looking in the direction of extension of the material scale (12, 12a, 12b, 22), a half Wheatstone bridge (17.1 - 17.34) of the first pair and a half Wheatstone bridge (17.1 - 17.34) of the second pair are arranged in alternation.

11. Absolute value encoder (10.0, 10.1, 10.2, 10.3, 10.4, 10.5, 10.6, 10.7) according to any of the preceding claims, **characterized in that** a respective separating region is provided between two adjacent code elements (14.1 - 14.9, 24.1 - 24.4).

**Revendications**

1. Codeur absolu magnétique (10.0, 10.1, 10.2, 10.3, 10.4, 10.5, 10.6, 10.7) pour déterminer la position absolue de deux corps (30, 32) déplaçables l'un par rapport à l'autre concernant une position angulaire ou une position longitudinale, avec au moins une première mesure matérialisée (12, 12a, 12b) définissant une piste absolue (13), sur le premier corps (30) en direction d'un sens de déplacement des corps (30, 32) qui comprend une multitude de premiers éléments de code (14.1 - 14.9) avec des propriétés magnétiques, avec au moins une première disposition de capteurs de champ magnétique (15) pour balayer des champs de dispersion magnétiques causés par la première mesure matérialisée (12, 12a, 12b), sur le second corps (32), et avec une unité d'évaluation qui est configurée pour recevoir des signaux de mesure d'une première disposition de capteurs de champ magnétique (15, 15a), sachant que chacun des premiers éléments de code (14.1 - 14.9) est disposé décalé d'un décalage de codage respectif dans le sens longitudinal de la piste absolue (13), notamment décalé symétriquement dans le sens longitudinal de la piste absolue (13), par rapport à une position de référence virtuelle (18.1 - 18.4) associée au premier élément de code respectif (14.1 - 14.9) dans une relation 1:1, sachant que les positions de référence virtuelles (18.1 - 18.4) sont définies de manière équidistante et sans décalage le long de la piste absolue (13), sachant que chaque premier élément de code (14.1 - 14.9) code un caractère défini d'un code comprenant N caractères, au moins sur la base de son décalage de codage, sachant que respectivement P éléments de code (14.1 - 14.9) successifs codent un mot de code respectif, sachant que chaque mot de code est unique à l'intérieur d'une première mesure matérialisée (12, 12a, 12b) et représente une position absolue respective, sachant que la première disposition de capteurs de champ magnétique (15, 15a) comprend une pluralité de premiers capteurs de champ magnétique (16.1 - 16.8) qui sont disposés de sorte que les premiers capteurs de champ magnétique (16.1 - 16.8) balaient pour une position respective de la première mesure matérialisée (12, 12a, 12b) simultanément plusieurs premiers éléments de code voisins (14.1 - 14.9) si bien que chaque capteur de champ magnétique (16.1 - 16.8) balaie un premier élément de code respectif (14.1 - 14.9), sachant que le nombre de premiers capteurs de champ magnétique (16.1 - 16.8) est supérieur ou égal au nombre P, et sachant que l'unité d'évaluation est configurée pour déterminer, sur la base des signaux de mesure, le décalage de codage de chaque premier élément de code (14.1 - 14.9) balayé et le caractère codé par le biais de ce décalage de codage et pour déterminer une position absolue sans une modification relative de position des éléments de code (14.1 - 14.9) par rapport à la première disposition de capteurs de champ magnétique (15, 15a).

**2.** Codeur absolu (10.0, 10.1, 10.2, 10.3, 10.4, 10.5, 10.6, 10.7) selon l'une des revendications précédentes, **caractérisé en ce qu'**en outre est prévue une seconde mesure matérialisée (22), définissant une piste incrémentale (23), avec une pluralité de seconds éléments de code (24.1 - 24.4) magnétiques, équidistants et une seconde disposition de capteurs de champ magnétique (15b) pour balayer la seconde mesure matérialisée (22), sachant que la piste incrémentale (23) s'étend parallèlement à la piste absolue (13) et écartée de celle-ci, sachant que chaque position de référence virtuelle (18.1 - 18.4) est déterminée, par rapport à sa position longitudinale sur la piste absolue (13), par la position longitudinale d'au moins un second élément de code (24.1 - 24.4) associé sur la piste incrémentale (23), et sachant que l'unité d'évaluation est configurée de sorte à recevoir des signaux de mesure de la seconde disposition de capteurs de champ magnétique (15b) et à déterminer la position de référence virtuelle (18.1 - 18.4) en se basant sur ceux-ci.

**3.** Codeur absolu (10.0, 10.1, 10.2, 10.3, 10.4, 10.5, 10.6, 10.7) selon l'une des revendications précédentes, **caractérisé en ce que** le codage d'un caractère respectif a lieu sur la base d'une valeur et/ou d'une direction du décalage de codage.

**4.** Codeur absolu (10.0, 10.1, 10.2, 10.3, 10.4, 10.5, 10.6, 10.7) selon la revendication 3, **caractérisé en ce que** chaque premier et/ou chaque second élément de code (14.1 - 14.9, 24.1 - 24.4) comprend un aimant permanent, sachant que la polarité magnétique d'un élément de code respectif (14.1 - 14.9, 24.1 - 24.4) est détectable par la disposition de capteurs de champ magnétique (15, 15a, 15b) associée, et que le codage d'un caractère respectif a lieu, de plus, sur la base de la polarité.

**5.** Codeur absolu (10.0, 10.1, 10.2, 10.3, 10.4, 10.5, 10.6, 10.7) selon l'une des revendications précédentes, **caractérisé en ce que** le décalage de codage comprend une composante transversale le long de la piste absolue (13).

**6.** Codeur absolu (10.0, 10.1, 10.2, 10.3, 10.4, 10.5, 10.6, 10.7) selon l'une des revendications précédentes, **caractérisé en ce qu'**au moins la première disposition de capteurs de champ magnétique (15, 15a, 15b) comprend au moins un capteur de champ magnétique (16.1 - 16.8), sachant que chaque capteur de champ magnétique (16.1 - 16.8) comprend plusieurs, notamment deux ou quatre éléments magnétorésistifs (20) qui sont branchés ensemble pour former au moins un pont de Wheatstone, notamment un demi-pont de Wheatstone (17.1. - 17.34) ou un pont complet de Wheatstone.

**7.** Codeur absolu (10.0, 10.1, 10.2, 10.3, 10.4, 10.5, 10.6, 10.7) selon la revendication 6, **caractérisé en ce, que** les éléments résistifs (20) sont des éléments résistifs AMR, GMR ou TMR sensibles aux changements de direction, dont la résistance varie linéairement avec la composante de champ magnétique, parallèle à la direction de décalage, ou dont la résistance dépend de l'angle du champ magnétique.

**8.** Codeur absolu (10.0, 10.1, 10.2, 10.3, 10.4, 10.5, 10.6, 10.7) selon l'une des revendications précédentes, **caractérisé en ce que** la disposition de capteurs de champ magnétique (15, 15a, 15b) comprend au moins un capteur de champ magnétique (16.1 - 16.8), sachant que chaque capteur de champ magnétique (16.1 - 16.8) est configuré au moins pour créer un premier signal de mesure pour une première position de mesure et un second signal de mesure pour une seconde position de mesure écartée de la première position de mesure dans la direction d'extension de la piste absolue (13), sachant que l'écart des positions de mesure est inférieur à l'écart des positions de référence virtuelles voisines (18.1 - 18.4), notamment inférieur ou égal au demi-écart des positions de référence virtuelles voisines (18.1 - 18.4), notamment égal à un quart de l'écart des positions de référence virtuelles voisines (18.1 - 18.4), et sachant que l'unité d'évaluation est configurée de sorte à déterminer, en tenant compte d'un critère prédéfini, le décalage de codage sur la base du premier ou du second signal de mesure.

**9.** Codeur absolu(10.0, 10.1, 10.2, 10.3, 10.4, 10.5, 10.6, 10.7) selon les revendications 6 et 8, **caractérisé en ce que** chaque capteur de champ magnétique(16.1 - 16.8) comprend au moins deux paires de demi-ponts de Wheatstone (17.1. - 17.34), sachant qu'une première paire est associée à la première position de mesure et une seconde paire à la seconde position de mesure.

**10.** Codeur absolu (10.0, 10.1, 10.2, 10.3, 10.4, 10.5, 10.6, 10.7) selon la revendication 9, **caractérisé en ce qu'**observés dans une direction d'extension de la mesure matérialisée (12, 12a, 12b, 22), sont disposés en alternance un demi-pont de Wheatstone (17.1. - 17.34) de la première paire et un demi-pont de Wheatstone (17.1. - 17.34) de la seconde paire.

**11.** Codeur absolu (10.0, 10.1, 10.2, 10.3, 10.4, 10.5, 10.6, 10.7) selon l'une des revendications précédentes, **caractérisé**

**en ce qu'**une zone de séparation respective est prévue entre deux éléments de code voisins (14.1 - 14.9, 24.1 - 24.4).

Fig. 1

EP 3 803 278 B1

Fig. 2a

Fig. 2b

Fig. 3

EP 3 803 278 B1

Fig. 4

Fig. 5

EP 3 803 278 B1

Fig. 6

Fig. 7

Fig.8a

Fig.8b

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6871554 B2
- US 6841958 B2
- US 9719805 B2
- DE 102015121474 A1
- DE 3942625 A1
- DE 4209629 A1
- EP 1980824 A1
- EP 2182330 A2
- US 2010117891 A2